# EUROPEAN PATENT APPLICATION

(11) **EP 3 064 057 A1**
(43) Date of publication of application: **07.09.2016**
(21) Application number: 14862124.6
(22) Date of filing: 20.10.2014
(51) Int. Cl.: A01G 31/00, A01G 7/00

(54) **PLANT CULTIVATION SYSTEM, PLANT CULTIVATION DEVICE, AND PLANT CULTIVATION METHOD**

(30) Priority: 01.11.2013 JP 2013228022
(71) Applicant: Takahashi, Hirosuke, Chiba-shi, Chiba 264-0024 (JP); Yamane, Motohiro, Kameda-gun, Hokkaido 041-1352 (JP)
(72) Inventor: YAMANE, Motohiro, Kameda-gun Hokkaido 041-1352 (JP)
(74) Representative: 2K Patentanwälte Blasberg Kewitz & Reichel
(86) International application number: PCT/JP2014/005172
(87) International publication number: WO 2015/072076

(57) **Abstract**

Provided are a plant cultivation system, device, and method for simultaneously producing wide variety of plants such as leaf vegetables, fruit vegetables, head-forming vegetables, and legumes year-round without causing continuous cropping injury by circulating a simple nutrient solution. In each of the plant cultivation system, device, and method, a temperature of reformed air, which is obtained by reforming air into a state suitable for setting a dissolved-oxygen concentration of the simple nutrient solution in a cultivation tank for holding a wide variety of plants to a predetermined concentration, is set to a predetermined temperature, and the reformed air is supplied, at a flow rate required for setting the dissolved-oxygen concentration of the simple nutrient solution to the predetermined concentration, from a vicinity of a bacterial colonization portion into the simple nutrient solution flowing at a predetermined speed through the cultivation tank.

## Description

### Technical Field

The present invention relates to an artificial cultivation of plants, and more particularly, to a plant cultivation system, a plant cultivation device, and a plant cultivation method for simultaneously cultivating wide variety of plants without causing continuous cropping injury through use of a simple nutrient solution.

### Background Art

In general, plants including vegetables, flowers, and ornamental plants are produced by an outdoor or indoor soil cultivation system (open type or semi-closed type soil cultivation system). However, the soil cultivation system has problems in that harvest may be influenced by the season and weather, continuous cropping injury may occur, and diseases may be caused by harmful insects. In order to solve those problems of the soil cultivation system, in recent years, an indoor artificial cultivation system for cultivating plants indoors through use of hydroponic cultivation has been put into practical use. The indoor artificial cultivation system is classified into a semi-closed type artificial cultivation system that uses only sunlight or both sunlight and artificial light, and a closed type artificial cultivation system that uses only artificial light. The present invention relates to the former semi-closed type artificial cultivation system.

Meanwhile, various systems have been employed in hydroponic cultivation, and a mainly used system thereof involves supplying nutrients to roots of plants through use of a flowing nutrient solution. This system is roughly classified into a thin film hydroponic cultivation system and a deep flow hydroponic cultivation system. The thin film hydroponic cultivation system involves dissolving nutrients required for the growth of plants in water and causing the nutrient solution to flow thinly onto a surface having a gentle slope, to thereby cultivate the plants with the nutrient solution. In the thin film hydroponic cultivation system, the extension of the roots is inhibited, resulting in a drawback in that a problem may be caused in the growth of the plants. Meanwhile, the deep flow hydroponic cultivation system involves supplying a nutrient solution to a cultivation tank in which plants grow so that most of the roots of the plants is soaked in the nutrient solution. Compared to the thin film hydroponic cultivation system, the deep flow hydroponic cultivation system has advantages in that the growth of roots is not inhibited because the water depth is large due to a large amount of the nutrient solution, and the management is easy because changes in concentration of nutrients and temperature are gentle. The present invention relates to the latter deep flow hydroponic cultivation system, and hydroponic cultivation hereinafter refers to the deep flow hydroponic cultivation.

The indoor artificial cultivation system using hydroponic cultivation has a large number of advantages as compared to soil cultivation. The indoor artificial cultivation system using hydroponic cultivation enables plants to be cultivated without using soil by artificially controlling environmental conditions such as natural light, artificial light, temperature, and humidity, and by soaking roots of the plants in a nutrient solution containing various nutrients. In such artificial cultivation system, the growth and harvest of plants are less liable to be influenced by the season and weather, thereby being easy to adjust the environmental conditions. Therefore, the artificial cultivation system can stably produce plants as planned. Further, a place for cultivation is not so limited, and hence the time and cost for transporting plants to mass-consumption areas may be reduced, for example, by providing a cultivation facility in a city or the suburb of the city. Further, compared to outdoor soil cultivation, the use amount of agricultural chemicals may be reduced, and hence the safety of the artificial cultivation system is high. Further, there are very few matters adhering to plants, and thus a cleaning step at time of shipping may be simplified.

However, the related-art hydroponic cultivation has the following problems. Specifically, the kinds of plants to be cultivated are limited, the nutrient solution needs to be discarded highly frequently, it is difficult to increase a dissolved-oxygen concentration of the nutrient solution, and there is a high risk in that root rot and growth failure may occur. In order to solve those problems, hitherto, the following hydroponic cultivation technologies have been proposed.

As a highly versatile hydroponic cultivation system and hydroponic cultivation method for cultivating plants efficiently, there have been provided a system and method that are capable of cultivating a large number of plants efficiently without causing root rot and growth failure by automatically adjusting, focusing on the relationship between the water level of a nutrient solution and the growth of each root, the water level of the nutrient solution in a cultivation tank of the plants in accordance with the extension of the roots of the plants and the environmental conditions such as sunshine (see, for example, Patent Literature 1).

Further, as a plant factory capable of simultaneously cultivating plants differing in kind, cultivation season, and growth stage in a single facility, there has been provided a factory that is capable of simultaneously cultivating a plurality of plants differing in cultivation season and growth stage, in which a large of number units capable of maintaining and managing a cultivation environment for each kind of the plants are installed in a cultivation chamber (see, for example, Patent Literature 2).

Further, as a plant cultivation system capable of cultivating plants efficiently by suppressing the propagation of germs and the like to accelerate the growth of the plants, there has been provided a plant cultivation system in which cultivation beds are arranged vertically in a plurality of stages so that a large number of kinds of plants may be cultivated in a small area, and a nutrient solution flows through a cultivation tank to be discharged out of the cultivation tank and then circulates through another cultivation tank to be re-used, with the result that the propagation of germs and the like in the nutrient solution is suppressed to eliminate the need to discard the nutrient solution (see, for example, Patent Literature 3).

Further, as a hydroponic cultivation device including a circulation path arranged so that a nutrient solution circulates to be supplied to cultivation beds, and a pump provided so as to circulate the nutrient solution in the circulation path, thereby being suitable for growing various plants such as fruit vegetables and leaf vegetables, an attempt has been made to provide a hydroponic cultivation device in which plants are allowed to grow easily and a harvest amount is increased by controlling the environment of the nutrient solution to an optimum state. For this purpose, there has been provided a hydroponic cultivation device in which part of the nutrient solution flowing through the circulation path is branched, and an aeration device and a water activator provided in the branch path supply oxygen to the nutrient solution and activate the nutrient solution (see, for example, Patent Literature 4).

Further, as means for controlling the air temperature in plant cultivation in a facility with energy saved, there has been provided a cultivation device including aeration means for aerating a nutrient solution, and means for adjusting the temperature of air to be used for aeration, thereby being capable of increasing the air content in the nutrient solution and controlling the temperature of the nutrient solution by aeration (see, for example Patent Literature 5).

Further, as a water tank for activating aerobic bacteria colonized on stone or the like by sending micro/nanobubbles from below, and oxidizing an ammonia component through the action of the aerobic bacteria to convert the ammonia component into nitrous acid, there has been provided a device unitized so that a porous material on which bacteria are easily colonized is accommodated in a net and an aeration tube for sending air to a lower portion of the net is arranged. In this case, a microbubble generation device is provided separately from the aeration tube so that air bubbles from the aeration tube and the microbubbles are brought into contact with the porous material (see, for example, Patent Literature 6).

### Citation List

### Patent Literature

[PTL 1] JP 2011-177130
[PTL 2] JP 2010-279269
[PTL 3] JP 2010-88425
[PTL 4] JP 2003-265057
[PTL 5] JP 2010-233481
[PTL 6] JP 2012-95630

### Summary of Invention

### Technical Problem

As described above, various related arts have been proposed regarding hydroponic cultivation. However, the following problems in hydroponic cultivation have not been solved yet even with those related arts.

First, in the related-art hydroponic cultivation technology, the occurrence of continuous cropping injury cannot be avoided. The main cause for continuous cropping injury in soil cultivation resides in the fact that the balance of nutrients and a pH is disrupted by continuously producing the same plant in the same crop land to aggravate the state of soil. Meanwhile, in the related-art hydroponic cultivation, there has been no idea of addressing continuous cropping injury. This is because, when a period from the state of a seedling to harvest is defined as one cycle, it is considered to be natural to discard a nutrient solution at each cycle in the related-art hydroponic cultivation. A nutrient solution is discarded at each cycle, and a fresh nutrient solution is used in a subsequent cycle. Therefore, at present, it is not necessary to consider continuous cropping injury in the related-art hydroponic cultivation. It is not recommendable to discard a nutrient solution at each cycle in consideration of a burden to be applied to the environment and cultivation cost. However, when a nutrient solution is used continuously without being discarded, the balance of the state of the nutrient solution is disrupted in the same manner as in soil, with the result that continuous cropping injury may occur. Thus, the idea of avoiding continuous cropping injury in hydroponic cultivation and a method therefor have not been considered in the related arts including the above-mentioned patent literatures.

Next, in the related-art hydroponic cultivation technology, only limited kinds of plants can be cultivated. Hitherto, in actuality, plants to be cultivated simultaneously in one facility are limited to one kind or several kinds of leaf vegetables, one kind or several kinds of fruit vegetables, or a combination of several kinds thereof. The reason for this is as follows. In order to simultaneously cultivate wide variety of plants differing in germination, harvest season, growth rate, and the like, it is considered to be necessary to change the cultivation environment and components of a nutrient solution in accordance with the kind of a plant. In the related-art hydroponic cultivation technology, conditions for simultaneously satisfying such various cultivation environments have not been found. Although the technologies for cultivating a plurality of kinds of plants have been proposed as disclosed in the above-mentioned patent literatures, wide variety of plants such as leaf vegetables, fruit vegetables, and legumes as in the present invention cannot be cultivated simultaneously with those technologies. For example, in Patent Literature 2, there is a disclosure that a plurality of kinds of plants can be cultivated in one facility. However, with such technology, it is necessary to construct a plurality of different environments for cultivating wide variety of plants in one facility, and thus there are a number of problems in terms of management and cost.

Further, it is difficult to achieve a sufficient dissolved-oxygen concentration of a nutrient solution in the related-art hydroponic cultivation technology, and when the same nutrient solution is used continuously for cultivation, the occurrence of root rot and growth failure of a root caused by decrease in dissolved-oxygen concentration cannot be avoided. When a nutrient solution is discarded at each cycle, the dissolved-oxygen concentration of the nutrient solution decreases in actuality, but the decrease in dissolved-oxygen concentration does not cause a problem because a fresh nutrient solution is used in a subsequent cycle. However, when the same nutrient solution is used continuously without being discarded, it is difficult to maintain a required concentration with the related-art technology. Further, in the related-art technology, for example, as disclosed in Patent Literature 4 or Patent Literature 5, an attempt has also been made to increase the dissolved-oxygen concentration of a nutrient solution. However, with such technology, there is a limitation on a dissolved-oxygen concentration that may be achieved, and the quality of air to be supplied to the nutrient solution is not considered. Therefore, the dissolved-oxygen concentration of the nutrient solution cannot be increased sufficiently to a required concentration.

Further, in the related-art hydroponic cultivation technology, the stable activation of aerobic bacteria in a cultivation tank is not considered. In the hydroponic cultivation method, the activation of bacteria, which serve to decompose nutrients in a nutrient solution so that the nutrients may be absorbed by plants, is important. In particular, the activation of aerobic bacteria excellent in decomposition ability is important. For example, in Patent Literature 6, there is a disclosure that aerobic bacteria are effectively retained in a unitized water tank. However, this technology cannot stably activate aerobic bacteria in a system in which a nutrient solution flows through a cultivation tank. Further, in the technologies of the above-mentioned other patent literatures, the stable activation of aerobic bacteria is not considered.

As described later, the inventor of the present invention has found that it is necessary to construct a plant cultivation environment that simultaneously satisfies a plurality of conditions in order to enable simultaneous cultivation of wide variety of plants without causing continuous cropping injury even when a simple nutrient solution is used continuously. In the related-art technologies including those of Patent Literature 1 to Patent Literature 6, there are separately disclosed only part of the conditions found by the inventor of the present invention, and the other part of the found conditions is neither disclosed nor suggested. Thus, only with a combination of those technologies, the object of the present invention may not be achieved.

In view of the above-mentioned circumstances, the present invention has been proposed to solve the above-mentioned problems, and an object of the present invention is to provide a plant cultivation system, device, and method for simultaneously producing wide variety of plants such as leaf vegetables, fruit vegetables, head-forming vegetables, and legumes year-round without causing continuous cropping injury by circulating a simple nutrient solution.

### Solution to Problem

In order to solve the above-mentioned problem, according to claim 1 of the present invention, there is provided a plant cultivation system for simultaneously cultivating wide variety of plants without causing continuous cropping injury through use of a simple nutrient solution,
the plant cultivation system being configured to:
set a temperature of reformed air to a predetermined temperature, the reformed air being obtained by reforming air into a state suitable for setting a dissolved-oxygen concentration of the simple nutrient solution in a cultivation tank for holding a wide variety of plants to a predetermined concentration; and
supply, at a flow rate required for setting the dissolved-oxygen concentration of the simple nutrient solution to the predetermined concentration, the reformed air from a vicinity of a bacterial colonization portion into the simple nutrient solution flowing at a predetermined speed through the cultivation tank.

Further, according to claim 2 of the present invention, in the plant cultivation system according to claim 1, the reformed air is supplied in a state of air bubbles into the simple nutrient solution through intermediation of a porous body.

Further, according to claim 3 of the present invention, in the plant cultivation system according to claim 2, the porous body is used as the bacterial colonization portion, and the reformed air is supplied into the cultivation tank through the bacterial colonization portion.

Further, according to claim 4 of the present invention, in the plant cultivation system according to any one of claims 1 to 3, the reformed air is supplied into the simple nutrient solution from a plurality of portions in the cultivation tank.

Further, according to claim 5 of the present invention, in the plant cultivation system according to any one of claims 1 to 4, the reformed air is obtained by removing nitrogen from the air.

Further, according to claim 6 of the present invention, in the plant cultivation system according to any one of claims 1 to 5, the reformed air is supplied into the simple nutrient solution after the reformed air is held in a reformed air storage chamber having an internal temperature maintained at a predetermined temperature until the reformed air reaches a temperature equal to the predetermined temperature.

Further, according to claim 7 of the present invention, in the plant cultivation system according to claim 1, an electrical conductivity indicating a nutrient solubility of the simple nutrient solution is from 2.5 mS/cm to 3.5 mS/cm.

Further, according to claim 8 of the present invention, in the plant cultivation system, the predetermined speed of the simple nutrient solution flowing through the cultivation tank is a flow speed of the simple nutrient solution, which is adjusted so that a pressure applied to a root of a wide variety of plants to be cultivated is substantially equal to a pressure in soil, the predetermined concentration is a concentration of dissolved oxygen, which is suitable for activating activities of the root of a wide variety of plants and aerobic bacteria, and the predetermined temperature is a temperature of the reformed air, which avoids an adverse effect on the root of a wide variety of plants.

Further, according to claim 9 of the present invention, in the plant cultivation system according to claim 1 or 8, the predetermined speed is from 3 cm/sec to 5 cm/sec.

Further, according to claim 10 of the present invention, in the plant cultivation system according to claim 1 or 8, the predetermined concentration is from 8 ppm to 12 ppm.

Further, according to claim 11 of the present invention, in the plant cultivation system according to claim 1 or 8, the predetermined temperature is from 18°C to 22°C.

Further, according to claim 12 of the present invention, in the plant cultivation system according to claim 1 or 8, the flow rate per hour of the reformed air is from 3 times to 5 times with respect to an entire volume of the simple nutrient solution circulating through the cultivation tank and a tank.

Further, according to claim 13 of the present invention, in the plant cultivation system according to claim 1, the plant cultivation system is configured such that the simple nutrient solution circulates through a circulation path connecting the cultivation tank and a tank to each other while being mixed without stagnation.

Further, according to claim 14 of the present invention, in any one of claims 1 to 3, there is provided a plant cultivation device for simultaneously cultivating wide variety of plants without causing continuous cropping injury through use of a simple nutrient solution,
the plant cultivation device including:
a cultivation tank for holding a wide variety of plants and the simple nutrient solution flowing at a predetermined speed;
air reforming means for reforming air into a state suitable for setting a dissolved-oxygen concentration of the simple nutrient solution in the cultivation tank to a predetermined concentration, to thereby obtain reformed air;
reformed air temperature adjusting means for adjusting a temperature of the reformed air to a predetermined temperature;
reformed air supply means for supplying the reformed air into the simple nutrient solution in the cultivation tank at a flow rate required for setting the dissolved-oxygen concentration of the simple nutrient solution to the predetermined concentration;
a bacterial colonization portion arranged in a vicinity of a reformed air supply portion of the reformed air supply means; and
simple nutrient solution circulation means for circulating the simple nutrient solution between the cultivation tank and the tank.

Further, according to claim 15 of the present invention, in the plant cultivation device according to claim 14, the reformed air supply portion is a porous body.

Further, according to claim 16 of the present invention, in the plant cultivation device according to claim 15, the porous body is the bacterial colonization portion.

Further, according to claim 17 of the present invention, in the plant cultivation device according to any one of claims 14 to 16, the reformed air supply portion includes a plurality of reformed air supply portions formed in the cultivation tank.

Further, according to claim 18 of the present invention, in the plant cultivation device according to claim 14, the air reforming means includes a filter for removing nitrogen from the air.

Further, according to claim 19 of the present invention, in the plant cultivation device according to claim 14, the reformed air temperature adjusting means includes a reformed air storage chamber having an internal temperature maintained at a predetermined temperature, and the reformed air is supplied by the reformed air supply means after the reformed air is held in the reformed air storage chamber until the reformed air reaches a temperature equal to the predetermined temperature.

Further, according to claim 20 of the present invention, in the plant cultivation device according to claim 14, an electrical conductivity indicating a nutrient solubility of the simple nutrient solution is from 2.5 mS/cm to 3.5 mS/cm.

Further, according to claim 21 of the present invention, in the plant cultivation device according to claim 14, the predetermined speed of the simple nutrient solution flowing through the cultivation tank is a flow speed of the simple nutrient solution, which is adjusted so that a pressure applied to a root of a wide variety of plants to be cultivated is substantially equal to a pressure in soil, the predetermined concentration is a concentration of dissolved oxygen, which is suitable for activating activities of the root of a wide variety of plants and aerobic bacteria, and the predetermined temperature is a temperature of the reformed air, which avoids an adverse effect on the root of a wide variety of plants.

Further, according to claim 22 of the present invention, in the plant cultivation device according to claim 14 or 21, the predetermined speed is from 3 cm/sec to 5 cm/sec.

Further, according to claim 23 of the present invention, in the plant cultivation device according to claim 14 or 21, the predetermined concentration is from 8 ppm to 12 ppm.

Further, according to claim 24 of the present invention, in the plant cultivation device according to claim 14 or 21, the predetermined temperature is from 18°C to 22°C.

Further, according to claim 25 of the present invention, in the plant cultivation device according to claim 14, the flow rate per hour of the reformed air is from 3 times to 5 times with respect to an entire volume of the simple nutrient solution circulating through the cultivation tank and the tank.

Further, according to claim 26 of the present invention, in the plant cultivation device according to claim 14, the simple nutrient solution circulation means includes: a pump for circulating the simple nutrient solution; a first tank for mixing the simple nutrient solution discharged from the cultivation tank; a second tank for mixing the simple nutrient solution to be supplied to the cultivation tank; and a cross tube for connecting the first tank and the second tank to each other.

Further, according to claim 27 of the present invention, there is provided a plant cultivation method for simultaneously cultivating wide variety of plants without causing continuous cropping injury through use of a simple nutrient solution,
the plant cultivation method including the steps of:
causing the simple nutrient solution to flow at a predetermined speed into a cultivation tank for holding a wide variety of plants;
reforming air into a state suitable for setting a dissolved-oxygen concentration of the simple nutrient solution in the cultivation tank to a predetermined concentration, to thereby obtain reformed air;
setting a temperature of the reformed air to a predetermined temperature; and
supplying the reformed air from a vicinity of a bacterial colonization portion into the simple nutrient solution in the cultivation tank at a flow rate required for setting the dissolved-oxygen concentration of the simple nutrient solution to the predetermined concentration.

Further, according to claim 28 of the present invention, in the plant cultivation method according to claim 27, the step of supplying the reformed air into the simple nutrient solution includes a step of supplying the reformed air into the simple nutrient solution in a state of air bubbles through intermediation of a porous body.

Further, according to claim 29 of the present invention, in the plant cultivation method according to claim 28, the step of supplying the reformed air into the simple nutrient solution includes supplying the reformed air through intermediation of the porous body serving as the bacterial colonization portion.

Further, according to claim 30 of the present invention, in the plant cultivation method according to any one of claims 27 to 29, the step of supplying the reformed air into the simple nutrient solution includes supplying the reformed air into the simple nutrient solution from a plurality of portions in the cultivation tank.

Further, according to claim 31 of the present invention, in the plant cultivation method according to claim 27, the step of reforming air includes a step of removing nitrogen from the air.

Further, according to claim 32 of the present invention, in the plant cultivation method according to claim 27, the step of setting a temperature of the reformed air to a predetermined temperature includes a step of holding the reformed air in a reformed air storage chamber having an internal temperature maintained at a predetermined temperature until the reformed air reaches the predetermined temperature.

Further, according to claim 33 of the present invention, in the plant cultivation method according to claim 27, an electrical conductivity indicating a nutrient solubility of the simple nutrient solution is from 2.5 mS/cm to 3.5 mS/cm.

Further, according to claim 34 of the present invention, in the plant cultivation method according to claim 27, the predetermined speed of the simple nutrient solution flowing through the cultivation tank is a flow speed of the simple nutrient solution, which is adjusted so that a pressure applied to a root of a wide variety of plants to be cultivated is substantially equal to a pressure in soil, the predetermined concentration is a concentration of dissolved oxygen, which is suitable for activating activities of the root of a wide variety of plants and aerobic bacteria, and the predetermined temperature is a temperature of the reformed air, which avoids an adverse effect on the root of a wide variety of plants.

Further, according to claim 35 of the present invention, in the plant cultivation method according to claim 27 or 34, the predetermined speed is from 3 cm/sec to 5 cm/sec.

Further, according to claim 36 of the present invention, in the plant cultivation method according to claim 27 or 34, the predetermined concentration is from 8 ppm to 12 ppm.

Further, according to claim 37 of the present invention, in the plant cultivation method according to claim 27 or 34, the predetermined temperature is from 18°C to 22°C.

Further, according to claim 38 of the present invention, in the plant cultivation method according to claim 27, the flow rate per hour of the reformed air is from 3 times to 5 times with respect to an entire volume of the simple nutrient solution circulating through the cultivation tank and a tank.

Further, according to claim 39 of the present invention, in the plant cultivation method according to claim 27, the plant cultivation method further includes a step of circulating the simple nutrient through a circulation path connecting the cultivation tank and a tank to each other while mixing the simple nutrient without stagnation.

The above-mentioned configurations of the present invention are based on the following points.

The inventor of the present invention has conducted various investigations and experiments over several years, and as a result, has found that it is necessary to construct a plant cultivation environment that satisfies a plurality of conditions in order to enable simultaneous cultivation of wide variety of plants without causing continuous cropping injury through use of a simple nutrient solution. The conditions and means for satisfying the conditions are as follows.

### (1) Simultaneous cultivation of wide variety of plants

In a process of the investigations aimed at addressing continuous cropping injury, the inventor of the present invention has paid attention to the fact that wide variety of plants coexist in wooded areas or fields without causing continuous cropping injury in spite of the same soil components. As the conditions for the foregoing, the following conditions are mainly considered. Nutrition required by wide variety of plants exists in soil sufficiently in terms of quantity and quality, and the kinds of root acids that are organic substances secreted by plants in a growth process are not biased due to the coexistence of wide variety of plants. In view of the foregoing, the inventor of the present invention has considered that plants may be cultivated without causing continuous cropping injury by reproducing an environment corresponding to the above-mentioned environment in hydroponic cultivation, and in the present invention, wide variety of plants have also been simultaneously cultivated through use of a simple nutrient solution having a high nutrient solubility. As a result, the homogenization of a nutrient solution has been accelerated without the kinds of root acids being biased, and it has become possible to cultivate plants without causing continuous cropping injury (that is, without discarding a simple nutrient solution highly frequently).

Herein, the simple nutrient solution refers to a nutrient solution having the same nutrients mixed homogeneously as a whole and circulating constantly in a predetermined state between all cultivation tanks for cultivating wide variety of plants. Wide variety of plants are a plurality of kinds of plants, preferably 10 or more kinds of plants, and at least about 30% of those plants are fruit vegetables and head-forming vegetables. In the present invention, the electrical conductivity (EC) indicating the nutrient solubility of the simple nutrient solution can be maintained at a high value of from about 2.5 mS/cm to about 3.5 mS/cm though the EC is from about 0.4 mS/cm to about 1 mS/cm in general hydroponic cultivation.

### (2) Stable dissolution of oxygen at high concentration in simple nutrient solution

Oxygen is essential for activities of a root during the growth of a plant and activities of aerobic bacteria that decompose nutrients in a nutrient solution so that the nutrients may be absorbed by the plant. Thus, in hydroponic cultivation, it is necessary that oxygen be dissolved stably in the nutrient solution in a concentration suitable for activating sufficient activities of the root of the plant and the aerobic bacteria (the concentration as used herein is referred to as "predetermined concentration"). In order to use a simple nutrient solution having a high nutrient solubility used in the present invention, it is essential to maintain a dissolved-oxygen concentration (DO) at a value higher than that of the related arts, and the concentration is preferably from about 8 ppm to about 12 ppm. In order to achieve such high dissolved-oxygen concentration, in the present invention, a large amount of air is supplied to the simple nutrient solution. For example, it is preferred that air be supplied in a volume of from about 3 times to about 5 times per hour with respect to the entire volume of the circulating simple nutrient solution. Further, it is preferred that a plurality of air supply portions be provided in the cultivation tank so that air is dispersed from the supply portions. With this, a large amount of air may be supplied uniformly and stably to the entire simple nutrient solution in the cultivation tank.

In the present invention, air is reformed into a state suitable for setting the dissolved-oxygen concentration of the simple nutrient solution to the above-mentioned concentration, and is supplied into the cultivation tank. Air contains about 21% of oxygen and about 78% of nitrogen. Thus, when air is merely supplied into the simple nutrient solution, nitrogen having a high partial pressure is dissolved preferentially into the simple nutrient solution as compared to oxygen having a low partial pressure, with the result that a required dissolved-oxygen concentration cannot be achieved. In view of the foregoing, in the present invention, reformed air having an increased oxygen concentration is supplied into the simple nutrient solution, and for example, it is preferred that reformed air obtained by removing nitrogen from air be supplied into the simple nutrient solution. The above-mentioned "air" supplied in a volume of from about 3 times to about 5 times per hour with respect to the entire volume of the circulating simple nutrient solution is such reformed air. The reformed air supplied into the cultivation tank is preferably in a state in which impurities such as ammonia, salt, and dust are removed.

Further, it is preferred that the reformed air be supplied into the simple nutrient solution in a state of air bubbles each having an appropriate size. Therefore, in the present invention, for example, the reformed air may be supplied into the simple nutrient solution through a porous body formed of ceramics. It is preferred that the size of each pore of the porous body be selected so that the air bubbles of the reformed air have an appropriate size.

### (3) Maintenance of temperature of reformed air supplied in large amount at temperature that avoids adverse effect on root

In the present invention, as described above, a large amount of the reformed air is supplied uniformly to the entire simple nutrient solution in the cultivation tank. A change in temperature of the large amount of the reformed air may have an adverse effect on roots of plants unless the temperature of the reformed air is managed appropriately. In view of the foregoing, in the present invention, the reformed air is supplied into the simple nutrient solution in a state of being maintained at a temperature that avoids an adverse effect on the roots of the plants (the temperature as used herein is referred to as "predetermined temperature"). The predetermined temperature of the reformed air is preferably from about 18°C to about 22°C, most preferably about 20°C.

Incidentally, in hydroponic cultivation, the temperature of the nutrient solution needs to be maintained at an appropriate temperature. In the related-art hydroponic cultivation, the nutrient solution is generally maintained at a predetermined temperature through use of heat exchange of hot water or cold water. Meanwhile, in the present invention, a large amount of the reformed air is supplied into the simple nutrient solution while the temperature thereof is managed. As a result, the temperature of the simple nutrient solution is also influenced by the temperature of the reformed air. In view of the foregoing, in one embodiment of the present invention, the temperature of the simple nutrient solution is set to be controlled only with the temperature of the reformed air supplied to the simple nutrient solution. It is generally considered to be inefficient to manage the temperature of the nutrient solution with air having a low thermal conductivity and a small specific heat. However, the inventor of the present invention does not give importance to the period of time required for the simple nutrient solution to reach the management temperature and rather considers that it is more advantageous to manage the temperature of the simple nutrient solution only through the temperature management of the reformed air as compared to the related-art method involving separately performing the temperature management of the reformed air and the temperature management of the simple nutrient solution, from the viewpoint of ease of management and cost.

### (4) Activation of aerobic bacteria in flowing simple nutrient solution

In hydroponic cultivation, it is a well-known technical matter that aerobic bacteria, which decompose nutrients in the nutrient solution so that the nutrients may be used by plants, need to be activated in the vicinity of roots. Thus, in the present invention, it is also important how to cause aerobic bacteria essential for the growth of plants to exhibit functions thereof while colonizing the aerobic bacteria appropriately in a required portion so as to prevent the aerobic bacteria from flowing out in the simple nutrient solution flowing at a predetermined speed, which forms a solid phase as described later. In particular, in order to sufficiently decompose the simple nutrient solution having a high nutrient solubility to be used in the present invention, it is necessary to cause aerobic bacteria to exhibit the functions thereof sufficiently. In the present invention, a plurality of bacterial colonization portions are provided so that the aerobic bacteria are retained to inhabit or propagate in the simple nutrient solution in the cultivation tank, and further, the supply portions of the reformed air managed at a predetermined temperature into the simple nutrient solution and the bacterial colonization portions are brought close to each other so that the bacteria therein can exhibit the functions thereof sufficiently through use of oxygen. As a result, in the present invention, the activation of the aerobic bacteria in the entire simple nutrient solution and the control of the amount of the aerobic bacteria may be performed. In the present invention, the electrical conductivity of the simple nutrient solution may be maintained at a value as high as about 3 mS/cm. This indicates that the aerobic bacteria function sufficiently, and consequently, high nutrient decomposition ability is achieved.

In the present invention, the reformed air may also be supplied through intermediation of the bacterial colonization portions by commonalizing the bacterial colonization portions and the supply portions of the reformed air. For example, when the above-mentioned porous body is also used as the bacterial colonization portions, fine unevenness and pores of the porous body serve as places for inhabitation or propagation of the aerobic bacteria, and the aerobic bacteria can use oxygen sufficiently.

### (5) Creation of environment corresponding to solid phase similar to soil in simple nutrient solution

In soil cultivation, the ideal soil morphology is considered to contain earth (solid phase), air (gas phase), and water (liquid phase) in a ratio of 4:3:3. In contrast, in the related-art hydroponic cultivation, particularly, in deep flow hydroponic cultivation, the solid phase does not exist, and hence the formation of the solid phase is not even considered. A root of a plant is an organ that absorbs water and nutrients, and the degree of the growth of the root influences the growth of the entire plant. In order for the root to grow appropriately, it is necessary that a pressure be applied to the root from the periphery so that appropriate resistance is applied to the root during growth. In soil cultivation, this pressure is applied by the solid phase, that is, earth. The inventor of the present invention has considered that it is also necessary to create an environment corresponding to the solid phase similar to soil in soil cultivation in the simple nutrient solution in the hydroponic cultivation technology, and in the present invention, the simple nutrient solution is allowed to flow through the cultivation tank at such a speed that the pressure applied to the root of the plant to be cultivated in the simple nutrient solution becomes substantially equal to the pressure applied to the root in soil (the speed as used herein is referred to as "predetermined speed"). In one embodiment, it is preferred that the flow speed of the simple nutrient solution in the cultivation tank be adjusted to from about 3 cm/s to about 5 cm/s. In the present invention, head-forming vegetables that require the healthy growth of a root for head formation may also be cultivated by creating the solid phase in hydroponic cultivation as described above.

### (6) Maintenance of simple nutrient solution in appropriate state

Even when various conditions as described are satisfied, in the case where the nutrient solution is degraded due to decay or the like, it is inevitable that the nutrient solution be discarded. Each plant differs in kind and amount of nutrients to be absorbed in the process of growth and kind and amount of secretions from a root. Therefore, in order to construct a method of cultivating wide variety of plants over a long period of time through use of the simple nutrient solution, it is necessary to maintain the entire nutrient solution in a uniform state to the extent possible, thereby allowing any plant to absorb required nutrients at any position. In view of the foregoing, the inventor of the present invention has conducted investigations of the shape of a nutrient solution tank, a nutrient solution piping method, a method of connecting a cultivation tank to a water supply/discharge path, and the like so as to enable complete mixing and circulation of the simple nutrient solution without degrading the simple nutrient solution, and has constructed a stagnation preventing and complete mixing structure for the simple nutrient solution. As a result, the state of the simple nutrient solution, for example, values of a pH, a nutrient solubility, a dissolved-oxygen concentration, and an oxidation-reduction potential may be maintained in a desired state without discarding the simple nutrient solution highly frequently.

The hydroponic cultivation environment satisfying the above-mentioned various conditions may be considered as a so-called optimized pseudo-soil environment. The optimized pseudo-soil environment is an environment in which the state in ideal soil regarding the relationship between the nutrient solution and the root of the plant is reproduced artificially, and is a cultivation environment in which features having a favorable effect on plants in soil cultivation are caused to function selectively, and the matters that may have an adverse effect are eliminated to the extent possible. In the related-art hydroponic cultivation technology, the idea of reproducing such optimized pseudo-soil environment in the nutrient solution and a method therefor are not considered.

A first aspect of the present invention is to provide a plant cultivation system capable of simultaneously cultivating wide variety of plants without causing continuous cropping injury through use of a simple nutrient solution. The plant cultivation system is configured to: set a temperature of reformed air to a predetermined temperature, the reformed air being obtained by reforming air into a state suitable for setting a dissolved-oxygen concentration of the simple nutrient solution in a cultivation tank for holding a wide variety of plants to a predetermined concentration; and supply, at a flow rate required for setting the dissolved-oxygen concentration of the simple nutrient solution to the predetermined concentration, the reformed air from a vicinity of a bacterial colonization portion into the simple nutrient solution flowing at a predetermined speed through the cultivation tank. The optimized pseudo-soil environment may be reproduced by satisfying the above-mentioned conditions.

In the present invention, preferably, wide variety of plants are a plurality of kinds of plants, preferably 10 or more kinds of plants, and at least about 30% of those plants are fruit vegetables and head-forming vegetables. Further, the reformed air is supplied preferably in a state of air bubbles into the simple nutrient solution through intermediation of a porous body, more preferably into the cultivation tank through the porous body used as the bacterial colonization portion. Preferably, the reformed air is supplied into the simple nutrient solution from a plurality of portions in the cultivation tank. Preferably, the reformed air is obtained by removing nitrogen from the air. Preferably, the reformed air is supplied into the simple nutrient solution after the reformed air is held in a reformed air storage chamber having an internal temperature maintained at a predetermined temperature until the reformed air reaches a temperature equal to the predetermined temperature. Preferably, an electrical conductivity indicating a nutrient solubility of the simple nutrient solution is from 2.5 mS/cm to 3.5 mS/cm.

In the present invention, preferably, the predetermined speed is a flow speed of the simple nutrient solution, which is adjusted so that a pressure applied to a root of a wide variety of plants to be cultivated is substantially equal to a pressure in soil, the predetermined concentration is a concentration of dissolved oxygen, which is suitable for activating activities of the root of a wide variety of plants and aerobic bacteria, and the predetermined temperature is a temperature of the reformed air, which avoids an adverse effect on the root of a wide variety of plants.

More preferably, the predetermined speed is from 3 cm/sec to 5 cm/sec, the predetermined concentration is from 8 ppm to 12 ppm, and the predetermined temperature is from 18°C to 22°C. Preferably, the flow rate per hour of the reformed air is from 3 times to 5 times with respect to an entire volume of the simple nutrient solution circulating through the cultivation tank and a tank.

In the present invention, preferably, the plant cultivation system is configured such that the simple nutrient solution circulates through a circulation path while being mixed without stagnation.

A second aspect of the present invention is to provide a plant cultivation device capable of simultaneously cultivating wide variety of plants without causing continuous cropping injury through use of a simple nutrient solution. The plant cultivation device includes: a cultivation tank for holding a wide variety of plants and the simple nutrient solution flowing at a predetermined speed; air reforming means for reforming air into a state suitable for setting a dissolved-oxygen concentration of the simple nutrient solution in the cultivation tank to a predetermined concentration, to thereby obtain reformed air; reformed air temperature adjusting means for adjusting a temperature of the reformed air to a predetermined temperature; reformed air supply means for supplying the reformed air into the simple nutrient solution in a plurality of cultivation tanks at a flow rate required for setting the dissolved-oxygen concentration of the simple nutrient solution to the predetermined concentration; a bacterial colonization portion arranged in a vicinity of a reformed air supply portion of the reformed air supply means; and simple nutrient solution circulation means for circulating the simple nutrient solution between the cultivation tank and a tank.

In the present invention, preferably, the reformed air supply portion is a porous body, more preferably, the porous body is used as the bacterial colonization portion. Preferably, the reformed air supply portion includes a plurality of reformed air supply portions formed in the cultivation tank. Preferably, the air reforming means includes a filter for removing nitrogen from the air. Preferably, the reformed air temperature adjusting means includes a reformed air storage chamber having an internal temperature maintained at a predetermined temperature, and the reformed air is supplied by the reformed air supply means after the reformed air is held in the reformed air storage chamber until the reformed air reaches a temperature equal to the predetermined temperature.

In the present invention, preferably, the simple nutrient solution circulation means includes: a pump for circulating the simple nutrient solution; a first tank for containing the simple nutrient solution discharged from the cultivation tank; a second tank for containing the simple nutrient solution to be supplied to the cultivation tank; and a cross tube for connecting the first tank and the second tank to each other.

A third aspect of the present invention is to provide a plant cultivation method for simultaneously cultivating wide variety of plants without causing continuous cropping injury through use of a simple nutrient solution. The plant cultivation method includes the steps of: causing the simple nutrient solution to flow at a predetermined speed into a cultivation tank for holding a wide variety of plants; reforming air into a state suitable for setting a dissolved-oxygen concentration of the simple nutrient solution in the cultivation tank to a predetermined concentration, to thereby obtain reformed air; setting a temperature of the reformed air to a predetermined temperature; and supplying the reformed air from a vicinity of a bacterial colonization portion into the simple nutrient solution in the cultivation tank at a flow rate required for setting the dissolved-oxygen concentration of the simple nutrient solution to the predetermined concentration.

In the present invention, the step of supplying the reformed air into the simple nutrient solution preferably includes a step of supplying the reformed air into the simple nutrient solution in a state of air bubbles through intermediation of a porous body, more preferably includes a step of suppling the reformed air into the cultivation tank through the porous body used as the bacterial colonization portion. Preferably, the step of supplying the reformed air into the simple nutrient solution includes a step of supplying the reformed air into the simple nutrient solution from a plurality of portions in the cultivation tank. Preferably, the step of reforming air includes a step of removing nitrogen from the air. Preferably, the step of setting a temperature of the reformed air to a predetermined temperature includes a step of holding the reformed air in a reformed air storage chamber having an internal temperature maintained at a predetermined temperature until the reformed air reaches the predetermined temperature. Preferably, the plant cultivation method further includes a circulating the simple nutrient through a circulation path while mixing the simple nutrient without stagnation.

### Advantageous Effects of Invention

According to the present invention, the following effects are attained.
(1) Wide variety of plants may be simultaneously cultivated in the same facility with the same simple nutrient solution without causing continuous cropping injury.
(2) According to the present invention, plants, which have a high nutritional value and are safe due to the non-use of agricultural chemicals, may be produced.
(3) Further, wide variety of plants may be produced with high efficiency as planned in one facility, and hence a plant production business flexibly adaptable to the situation of the market without being influenced by the weather may be established.
(4) Further, according to the present invention, the nutrient solution is not discarded highly frequently, and hence an environment-conscious sustainable plant production factory having a low environmental burden may be realized.

### Brief Description of Drawings

FIG. 1 is a schematic overall view for illustrating an embodiment of the present invention.
FIG. 2 is a schematic plan view for illustrating a main portion according to the embodiment of the present invention, and flows of a simple nutrient solution and reformed air.
FIG. 3 is a partially cutaway perspective view for illustrating a cultivation tank according to the embodiment of the present invention.
FIG. 4 is a sectional view of the main portion according to the embodiment of the present invention.
FIG. 5(a), FIG. 5(b), FIG. 5(c), FIG. 5(d), and FIG. 5(e) are each a perspective view for illustrating a support base to be arranged in the cultivation tank according to the embodiment of the present invention.
FIG. 6(a) and FIG. 6(b) are each a perspective view for illustrating a small cultivation pot to be arranged in the cultivation tank according to the embodiment of the present invention.
FIG. 7(a) and FIG. 7(b) are each a perspective view for illustrating a large cultivation pot to be arranged in the cultivation tank according to another embodiment of the present invention.
FIG. 8 is a perspective view of the main portion, for illustrating a mounting state of the small cultivation pot.
FIG. 9 is a perspective view for illustrating a cultivation pot receiving body serving as a support.
FIG. 10 is a perspective view for illustrating a mounting state of the small cultivation pot in the cultivation pot receiving body.
FIG. 11 is a perspective view for illustrating a mounting state of the large cultivation pot in the cultivation pot receiving bodies.
FIG. 12 is a perspective view for illustrating a support base using a cultivation sheet according to another embodiment of the present invention.
FIG. 13 is a partially cutaway perspective view for illustrating another mounting structure of the cultivation sheet.
FIG. 14 is an exploded perspective view of FIG. 13.
FIG. 15 is a sectional view taken along the line A-A of FIG. 13.
FIG. 16 is a front view for illustrating a discharge-side nutrient solution tank according to the embodiment of the present invention.
FIG. 17 is a front view of a supply-side nutrient solution tank according to the embodiment of the present invention.
FIG. 18 is an explanatory view for illustrating a flow of the simple nutrient solution between the cultivation tank and the discharge-side nutrient solution tank according to the embodiment of the present invention.
FIG. 19 is an explanatory view for illustrating a flow of the simple nutrient solution between the cultivation tank and the supply-side nutrient solution tank according to the embodiment of the present invention.
FIG. 20 is a perspective view for illustrating a bacterial colonization portion according to the embodiment of the present invention.
FIG. 21 is a perspective view for illustrating a bacterial colonization portion according to another embodiment of the present invention.

### Description of Embodiments

Now, embodiments of the present invention are described in detail with reference to the accompanying drawings.

### [Overview of System of Present Invention]

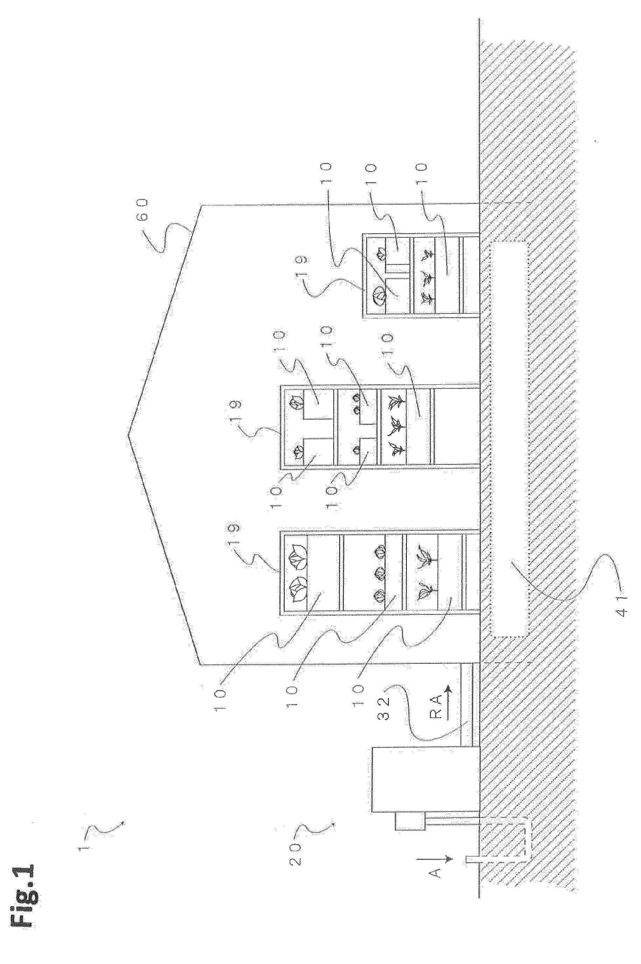

FIG. 1 is a schematic view of a plant cultivation system 1 according to one embodiment of the present invention. The plant cultivation system 1 includes a house 60, a plurality of cultivation tanks 10 that are accommodated in the house 60 and cultivate plants, and reformed air production means 20 for reforming outside air A into reformed air RA, including reformed air temperature adjusting means for adjusting the temperature of the reformed air RA. Each of the plurality of cultivation tanks 10 extends in a direction perpendicular to the drawing sheet of FIG. 1 so that wide variety of plants are supported and a simple nutrient solution S containing nutrients for growing the plants flows through each of the cultivation tanks 10. The cultivation tanks 10 are supported by a support frame 19, and the plurality of cultivation tanks 10 may be configured in a multi-stage form so as to be easily adaptable to the kinds of the plants to be cultivated and the periods to time of harvest thereof. Roots of wide variety of plants to be cultivated are soaked in the simple nutrient solution S. The reformed air RA is supplied into the simple nutrient solution S flowing through the cultivation tanks 10. The house 60 is herein intended to include an underground portion, for example, in which a required device including a discharge-side nutrient solution tank 41 described later is buried. In FIG. 1, the reformed air production means 20 is provided outside of the house 60 but may be provided in the house 60.

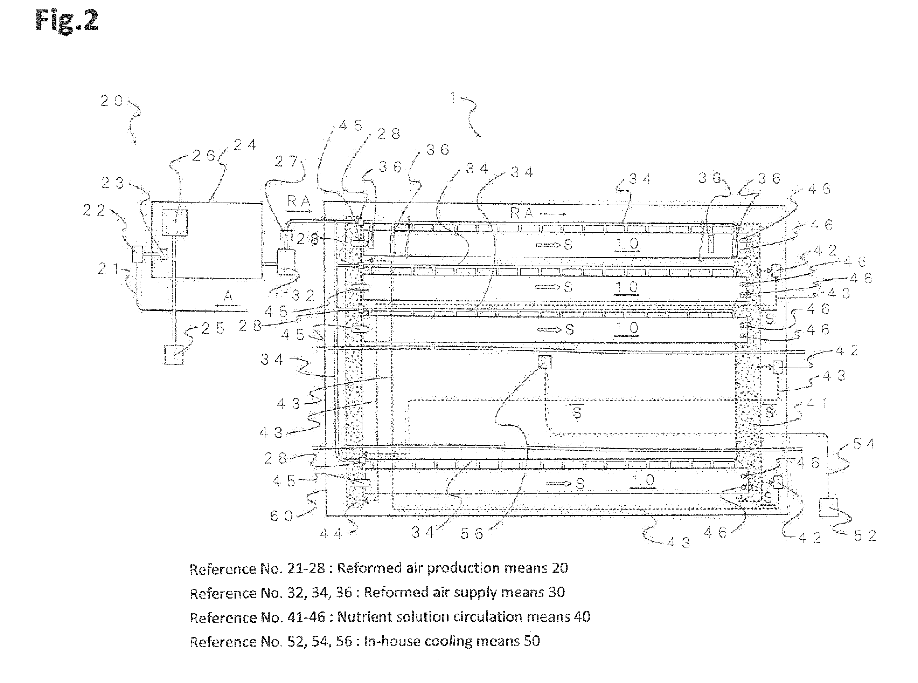

FIG. 2 is a schematic plan view for illustrating the configurations of various means of the plant cultivation system 1 and the flows of the simple nutrient solution S and the reformed air RA. The plant cultivation system 1 includes the plurality of cultivation tanks 10 for growing wide variety of plants, the reformed air production means 20 for reforming outside air to create the reformed air RA to be supplied to the simple nutrient solution S flowing through the plurality of cultivation tanks 10, including the reformed air temperature adjusting means for adjusting the temperature of the reformed air RA, reformed air supply means 30 for supplying the produced reformed air RA to the simple nutrient solution S, and nutrient solution circulation means 40 for circulating the simple nutrient solution S between the plurality of cultivation tanks 10. The plant cultivation system 1 may further include in-house cooling means 50 to be used for decreasing the temperature of the atmosphere in the house 60. The cultivation tank 10 and the respective means 20, 30, 40, and 50 illustrated in FIG. 2 are described below in detail.

### [Plants that can be Cultivated]

In the plant cultivation system 1, a large number of kinds of plants may be simultaneously cultivated year-round. Examples thereof include: leaf vegetables such as a spinach and a leaf lettuce; fruit vegetables such as a tomato, an eggplant, and a cucumber; head-forming vegetables such as a Chinese cabbage, a cabbage, and a lettuce; legumes such as peas, broad beans, and earth nuts; fruits such as a strawberry and a melon; and flowers and ornamental plants. Further, in the plant cultivation system 1, plants differing in growth stage may be simultaneously cultivated together during a period from time immediately after germination to time of harvest. The kinds of the plants to be cultivated simultaneously include a plurality of kinds of plants, preferably 10 or more kinds of plants, and at least about 30% of those plants are fruit vegetables and head-forming vegetables.

### [Simple Nutrient Solution]

In the plant cultivation system 1, a nutrient solution in which the same nutrients are mixed homogeneously as a whole circulates constantly in a predetermined state between all the cultivation tanks 10 for cultivating wide variety of plants, and the nutrient solution as used herein is referred to as "simple nutrient solution S". In the present invention, as the simple nutrient solution S, a nutrient solution containing the same components is used continuously irrespective of the kinds, growth stage, and cultivation season of the plants, and it is sufficient that water and/or nutrients be appropriately replenished by an amount decreased due to the evaporation and absorption by the plants. When a period from germination to harvest of the plant is defined as one cycle, in the related-art hydroponic cultivation, a nutrient solution is discarded and a fresh nutrient solution is used at each cycle, and hence there has been no idea of addressing continuous cropping injury. In contrast, in the plant cultivation system 1, as a result of the experiments conducted by the inventor of the present invention, leaf vegetables have been cultivated at least 30 times by continuous cropping and fruit vegetables have been cultivated at least 5 times by continuous cropping without discarding the simple nutrient solution S highly frequently and without causing continuous cropping injury.

There is no particular limitation on the components contained in the simple nutrient solution S, and components to be used in general hydroponic cultivation may be used.

The simple nutrient solution S is managed so that the state thereof is maintained constant, that is, at least values of parameters such as a dissolved-oxygen concentration (DO), an electrical conductivity (EC), a temperature Ts, a hydrogen ion concentration index (pH), and an oxidation-reduction potential (ORP) are maintained substantially constant. In particular, the simple nutrient solution S used in the present invention is significantly different from that in the related-art hydroponic cultivation in value of the dissolved-oxygen concentration (DO) and maintenance method therefor, value of the electrical conductivity (EC), and maintenance method for the temperature Ts.

The dissolved-oxygen concentration (hereinafter sometimes referred to as "DO") is a concentration of oxygen dissolved in the simple nutrient solution S. Oxygen dissolved in the simple nutrient solution S is essential for both the activities of roots during the growth of plants and the activities of bacteria that decompose the components in the nutrient solution so that the components may be absorbed by the plants. Thus, it is necessary that a sufficient amount of oxygen be dissolved stably in the simple nutrient solution S so that those activities are appropriately conducted. In the present invention, the DO of the simple nutrient solution S is maintained at a predetermined concentration (that is, the concentration suitable for oxygen to activate the activities of the roots of the plants and the aerobic bacteria) higher than the concentration in the related-art hydroponic cultivation, and it is preferred that the DO be maintained at from about 8 ppm to about 12 ppm in one embodiment. In order to maintain the DO at such high concentration, a predetermined flow rate of reformed air is supplied preferably in a state of air bubbles to the simple nutrient solution S. The production and supply of the reformed air are described later.

The electrical conductivity (hereinafter sometimes referred to as "EC") is a value indicating the ease of flow of electricity, and in hydroponic cultivation, the EC is generally used as an indicator of the nutrient solubility in the nutrient solution. In the present invention, the EC of the simple nutrient solution S may be maintained at a value that is significantly higher than the value in the related-art hydroponic cultivation, and it is preferred that the EC be maintained at from about 2.5 mS/cm to about 3.5 mS/cm in one embodiment. As long as the EC of the simple nutrient solution is 1.0 mS/cm or more even if the EC is less than 2.5 mS/cm, cultivation may be performed. Further, as long as the EC is less than 4.0 mS/cm even if the EC is more than 3.5 mS/cm, cultivation may be performed. However, in order to cultivate wide variety of plants with high quality, the EC falls preferably within a range of from about 2.5 mS/cm to about 3.5 mS/cm. In the related-art hydroponic cultivation, the EC of the nutrient solution is from about 0.4 mS/cm to about 1.0 mS/cm, and when the nutrient solution having an EC that is higher than the above-mentioned range, plants may not grow due to fertilizer injury (a large amount of nutrients damages the functions of roots to droop or wither the plants). However, in the system of the present invention, when a high DO is ensured, the activities of the roots of the plants and the aerobic bacteria are appropriately activated, and the nutrients are decomposed even when the EC is high and may be sufficiently absorbed by the roots. Therefore, the simple nutrient solution S having a high EC may be used. Plants having a high nutritional value may be grown within a short period of time through use of the simple nutrient solution S having a high EC.

Further, in the related-art hydroponic cultivation, in general, plants are cultivated in a plurality of stages in the process of growth during a period from time immediately after germination to time of harvest, and nutrients are added to the nutrient solution in accordance with the cultivation stage to change the EC of the nutrient solution. For example, plants are cultivated through use of a nutrient solution having a low EC immediately after germination, and then, the EC of the nutrient solution is increased along with the growth of the plants. This is because, unless the EC is managed in accordance with the growth stage, there is a risk in that the plants may suffer from fertilizer injury. An appropriate EC may be selected in accordance with the growth stage in hydroponic cultivation of a single kind or a small number of kinds of plants, but it becomes significantly difficult as the number of kinds of plants increases. In the present invention, even when the simple nutrient solution S having a high EC is used, the nutrients may be appropriately decomposed and sufficiently absorbed by roots due to the activation of the activities of the roots of the plants and the aerobic bacteria caused by the high DO, and even plants immediately after germination do not suffer from fertilizer injury. Therefore, the simple nutrient solution S having the same high EC may be used consistently during a period from time immediately after germination to time of harvest.

The temperature Ts of the simple nutrient solution S is maintained at a temperature that achieves the metabolism of plants to the utmost extent and is most suitable for the growth of roots of the plants. The temperature Ts is from about 18°C to about 22°C though the temperature Ts may slightly vary depending on the kind of the plant. In the present invention, the Ts is maintained at from about 18°C to about 22°C, preferably at about 20°C. In the present invention, the temperature Ts of the simple nutrient solution S is maintained at the above-mentioned temperature by maintaining the temperature of the reformed air RA supplied to the simple nutrient solution S at the predetermined temperature. The detail of the maintenance of the temperature of the reformed air is described later.

Further, the hydrogen ion concentration index (hereinafter referred to as "pH") of the simple nutrient solution S is maintained to be substantially constant. The following is known about the value of the pH of the simple nutrient solution S. When the value of a pH of the simple nutrient solution S is too high, roots of plants turn brownish to wither, and when the value of a pH of the simple nutrient solution S is too low, the absorption efficiency of nutrients in the nutrient solution decreases. In any case, the growth of the plants is adversely influenced. Thus, in one embodiment, the pH of the simple nutrient solution S is maintained preferably at from about 5.5 to about 7.5, more preferably at from about 6.2 to about 7.2.

Further, the oxidation-reduction potential (hereinafter sometimes referred to as "ORP") of the simple nutrient solution S is maintained to be substantially constant. It is known that the value of the ORP of the simple nutrient solution S has an adverse effect on the activation of aerobic bacteria in the simple nutrient solution S even when the value is too high or too low. Thus, in one embodiment, the OPR of the simple nutrient solution S is maintained preferably at from about 200 mv to about 350 mv, more preferably at from about 230 mv to about 320 mv.

In the present invention, all the values of the dissolved-oxygen concentration (DO), the electrical conductivity (EC), the nutrient solution temperature (Ts), the hydrogen ion concentration index (pH), and the oxidation-reduction potential (ORP) are monitored and recorded constantly through use of appropriate sensors, and those values can be maintained at substantially predetermined values by taking required measures in the case where those values have deviated from the predetermined ranges or may deviate from the predetermined ranges. The values of the EC, pH, and ORP of those indicators can be maintained by mixing an appropriate amount of water and/or nutrients with the simple nutrient solution S as necessary. The DO can be maintained by controlling the supply amount of reformed air to be supplied. The Ts can be maintained by controlling the temperature of the reformed air to be supplied.

### [Cultivation Tank]

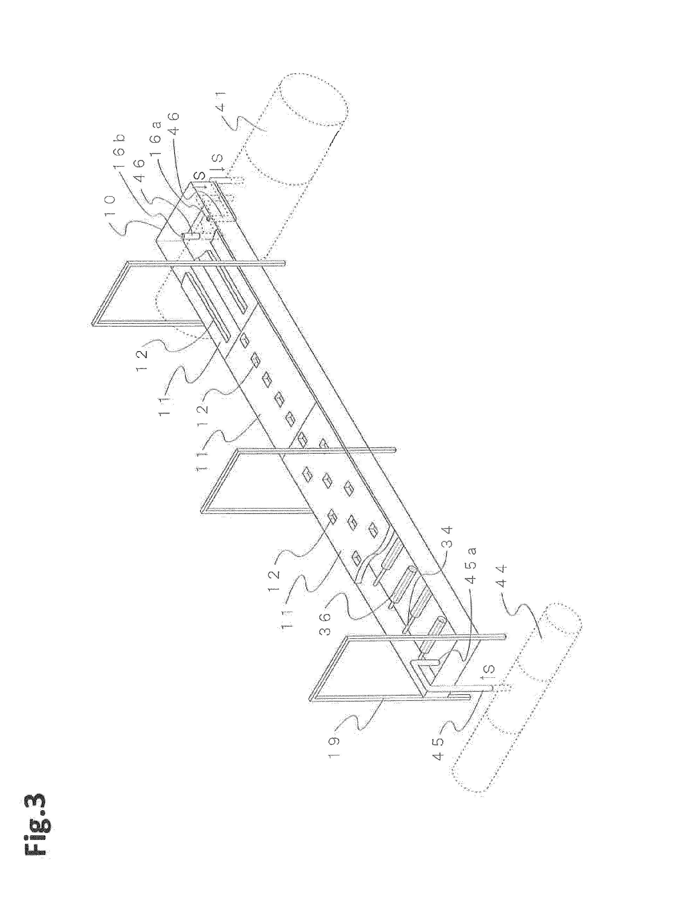

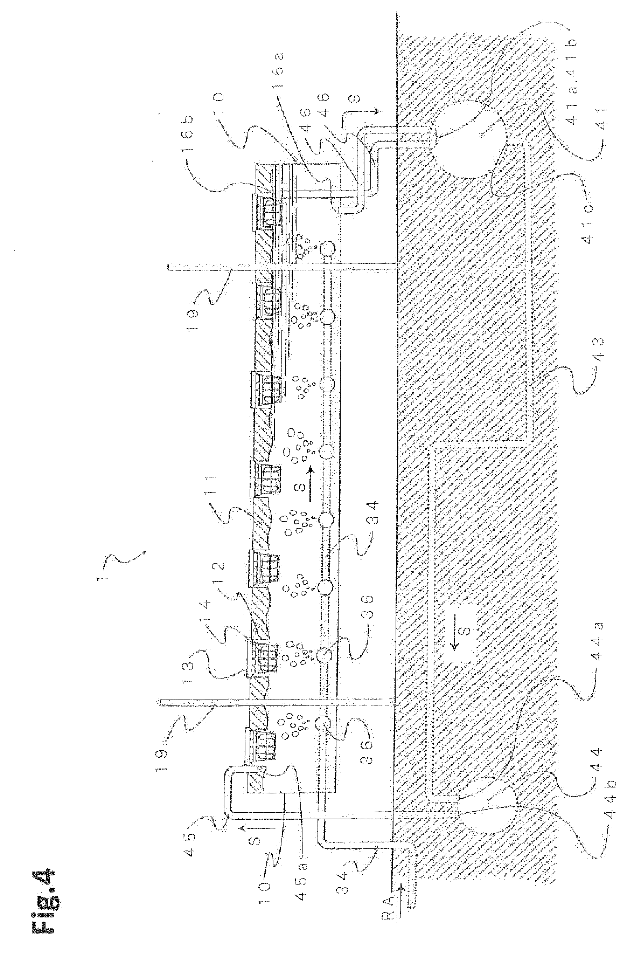

FIG. 3 is a perspective view for illustrating one of the plurality of cultivation tanks 10 according to one embodiment, in which support bases 11 each serving as a support to be arranged in an upper opening in the cultivation tank 10 are illustrated in a partially cutaway state so that the inside can be seen. In FIG. 3, a plurality of kinds of support bases 11 are used, including a support base 11 with openings 12 each having a substantially square shape in plan view and a support base 11 with openings 12 each having a substantially rectangular shape in plan view. The kind of the support base 11 may be appropriately selected in accordance with the kind of a plant to be cultivated. FIG. 4 is a sectional side view of the cultivation tank 10 in the case where small cultivation pots 13 are used. The cultivation tank 10 has such a configuration that a bottom surface and a side surface are each surrounded by wall surfaces (that is, an upper portion is opened), and the simple nutrient solution S flows through the inside at a predetermined speed in one direction. In FIG. 3 and FIG. 4, only one stage of the cultivation tank 10 is illustrated, but as necessary, a multi-stage configuration may also be employed by further installing another cultivation tank 10 on the cultivation tank 10. For example, the plurality of cultivation tanks 10 may have a multi-stage configuration so that leaf vegetables are cultivated in a lower stage and fruit vegetables or head-forming vegetables are cultivated in an upper stage. In the case of the multi-stage configuration, the distance between the cultivation tanks 10 in the upper and lower stages may be determined in accordance with the size during growth of plants to be cultivated in each of the cultivation tanks 10 and the radiation state of sunlight. The cultivation tank 10 is supported by the support frame 19. Further, it is preferred that the cultivation tank 10 be arranged so that sunlight is sufficiently radiated to the plants.

The length, width, and depth of each of the cultivation tanks 10 is determined in accordance with the kind and amount of plants to be cultivated in each of the cultivation tanks 10 or the scale of a cultivation facility. In particular, the width and depth are determined so that roots and stalks of plants to be cultivated can maintain original growth shapes thereof. In one embodiment of the present invention, for example, the cultivation tank 10 having a width of from about 200 mm to about 1,000 mm and a depth of from about 200 mm to about 1,000 mm may be used in accordance with the kind of plants to be cultivated.

It is preferred that a side wall and a bottom wall of the cultivation tank 10 have a heat-insulated structure so that the temperature of the simple nutrient solution S flowing through the inside is maintained at a predetermined temperature. The heat-insulated structure of the cultivation tank 10 may be realized, for example, by laminating heat insulating materials on each outer surface of the side wall and the bottom wall, or forming the side wall and the bottom wall into a double structure and arranging a heat insulating material in a gap therebetween. There is no particular limitation on the material for the cultivation tank 10 as long as appropriate strength may be maintained so that the tank 10 itself is not deformed or damaged under a state in which the simple nutrient solution S is held inside, and for example, a cultivation tank made of a metal, a cultivation tank made of a resin, a cultivation tank made of FRP, or the like may be used.

The simple nutrient solution S is supplied to the cultivation tank 10 through a nutrient solution supply path 45 from a supply-side nutrient solution tank 44 described later. As illustrated in FIG. 4, a nutrient solution supply port 45a of the nutrient solution supply path 45 is arranged so as to be positioned in the vicinity of a liquid surface of the simple nutrient solution S in the cultivation tank 10. The supplied simple nutrient solution S flows through the cultivation tank 10 in a direction of the arrow S of FIG. 2 and FIG. 4 at a predetermined speed. It is preferred that the predetermined speed of the simple nutrient solution S be from about 3 cm/sec to about 5 cm/sec as described above.

Discharge ports 16 (16a, 16b) for the nutrient solution are arranged in the cultivation tank 10, and the simple nutrient solution S flowing through the cultivation tank 10 is discharged to the discharge-side nutrient solution tank 41 described later through a nutrient solution discharge path 46 from each of the discharge ports 16 (16a, 16b). In one embodiment, it is preferred that the two discharge ports 16a and 16b be arranged. The first discharge port 16a is arranged so as to be positioned flush with a bottom surface of the cultivation tank 10, and the second discharge port 16b is arranged so as to be positioned at a place close to a water surface of the single nutrient solution S. It is preferred that an overflow tube be used as the nutrient solution discharge path 46 having the second discharge port 16b as an inflow port. Through formation of the supply port 45a and the discharge ports 16a and 16b for the simple nutrient solution S into such positional relationship, the simple nutrient solution S in the cultivation tank 10 may maintain a substantially uniform flow speed from the vicinity of the liquid surface to the vicinity of the bottom surface of the cultivation tank 10, and the stagnation of simple nutrient solution S in the cultivation tank 10 may be effectively prevented.

A plurality of supply portions 36 for supplying the reformed air RA to the simple nutrient solution S are arranged in the cultivation tank 10. The detail of the reformed air supply portions 36 is described later. The plurality of reformed air supply portions 36 may be arranged in a bottom portion of the cultivation tank 10 at a predetermined interval from an upstream side to a downstream side, specifically, at an interval of about 50 cm in one embodiment.

### [Support]

A support for supporting plants is arranged in the upper opening of the cultivation tank 10. In one embodiment, the support may be formed of the support base 11, the cultivation pots 13, and a medium 14. As the support base 11, a float or a lid to be arranged so as to close the upper opening of the cultivation tank 10 may be used. In the case where the support base 11 is a float, it is preferred that the support base 11 be formed of a material that does not sink into the simple nutrient solution S due to the weight caused by the growth of plants to be cultivated and that has high heat insulation property.

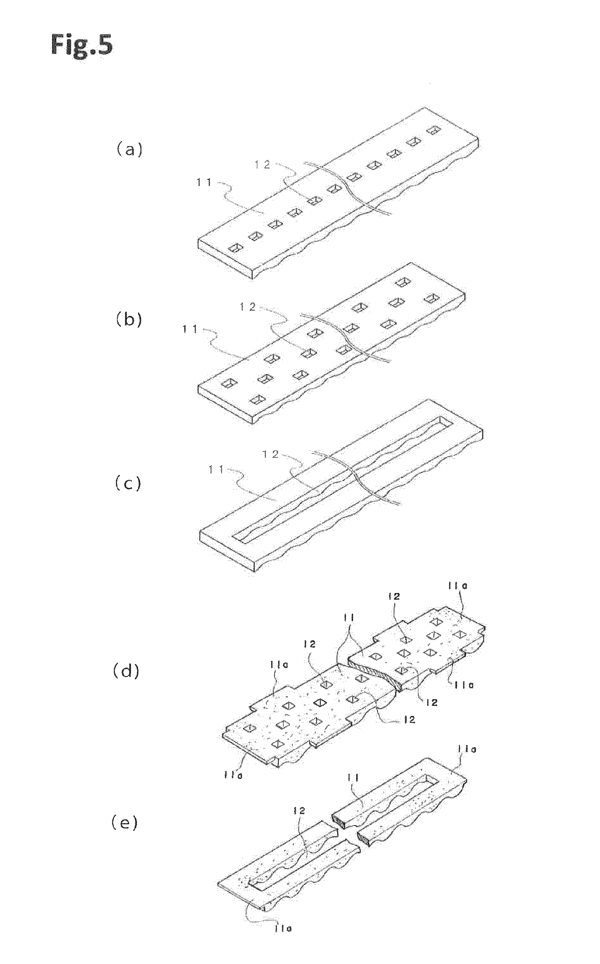

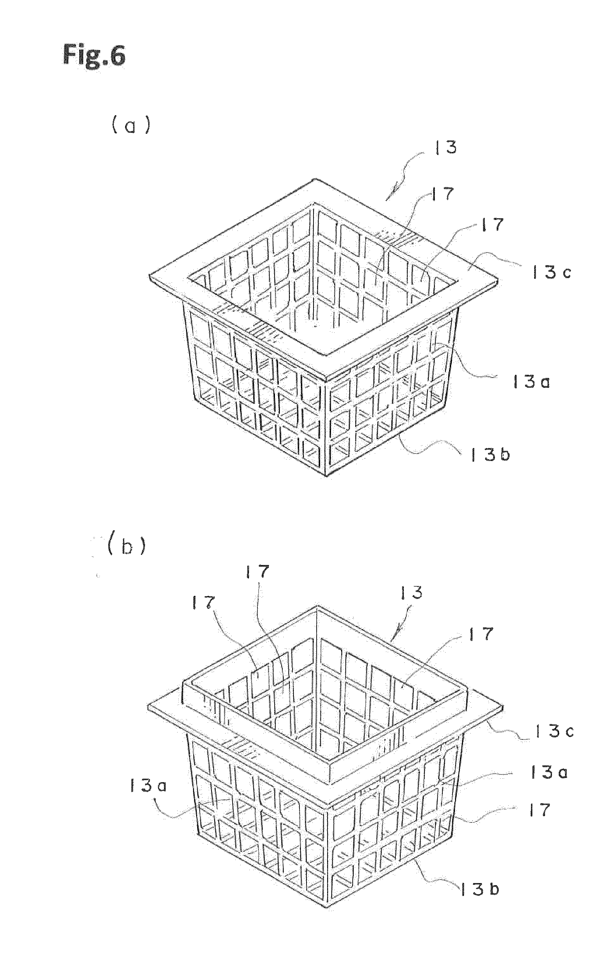

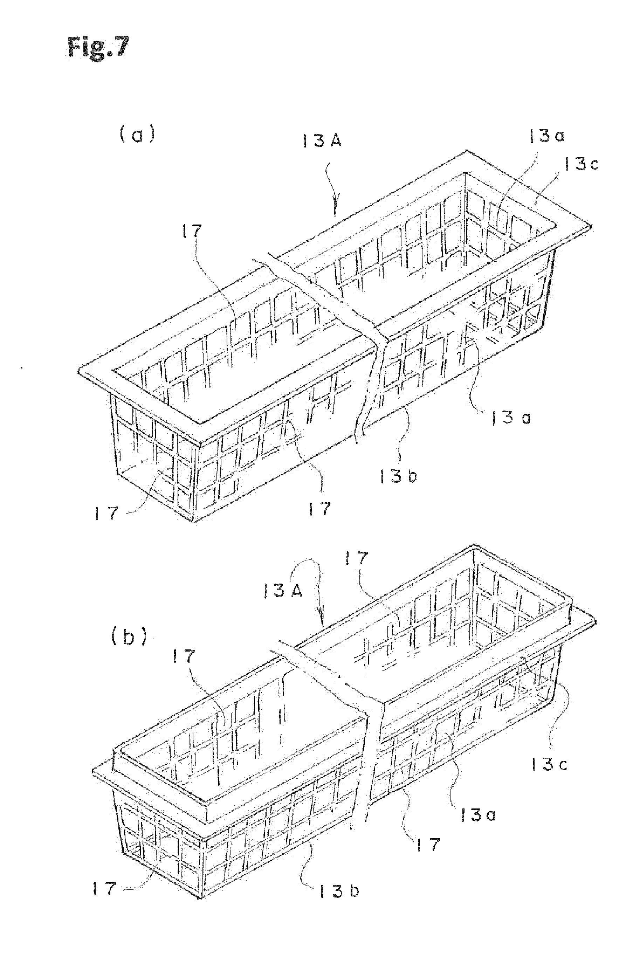

A plurality of openings 12 are formed in the support base 11 so as to penetrate through the support base 11 in a thickness direction as illustrated in FIG. 3 and FIGS. 5, and cultivation pots 13 and 13A for supporting plants are arranged in the openings 12. In this embodiment, as the cultivation pots 13 and 13A, any one of the small cultivation pot 13 illustrated in FIGS. 6 and the large cultivation pot 13A illustrated in FIGS. 7 may be used in accordance with the kind of plants to be supported. It is preferred that the small cultivation pot 13 illustrated in FIGS. 6 be used for plants having a relatively large weight after grown, such as fruit vegetables and head-forming vegetables, and it is preferred that the large cultivation pot 13A illustrated in FIGS. 7 be used for plants having a relatively small weight after grown, such as leaf vegetables. The shape and number of the openings 12 may be appropriately determined in accordance with the shape and number of the cultivation pots 13 and 13A to be used. For example, the support bases 11 illustrated in FIG. 5(a), FIG. 5(b), and FIG. 5(d) each have the plurality of openings 12, in which the small cultivation pots 13 illustrated in FIGS. 6 may be arranged, along a longitudinal direction. The support bases 11 illustrated in FIG. 5(c) and FIG. 5(e) each have the opening 12 in which the large cultivation pot 13A illustrated in FIGS. 7 may be arranged along a longitudinal direction.

It is preferred that a lower surface of the support base 11 have a shape that does not inhibit the flow of the simple nutrient solution S in the water tank. In particular, in the case where the support base 11 is a float, the sinking amount of the support base 11 below the liquid surface increases gradually along with the growth of plants, and as a result, the simple nutrient solution S in the openings 12 may be stagnated. Therefore, it is preferred that the lower surface of the support base 11 have a shape that prevents the stagnation of the simple nutrient solution S in the openings 12. For those purposes, in one embodiment, it is preferred that the lower surface of the support base 11 be formed in a waveform with respect to a flow direction of the simple nutrient solution S as illustrated in FIG. 4 and FIGS. 5. In one embodiment of the present invention, it is preferred that the flow speed of the simple nutrient solution S in the cultivation tank 10 be from about 3 cm/sec to about 5 cm/sec as described above. At this flow speed, the distance between protrusions of the waveform of the lower surface of the support base 11 is preferably from about 100 mm to about 105 mm. Further, in the case where the support base 11 is a float, in order to prevent the simple nutrient solution S from being stagnated in the openings 12 even when the float sinks, it is preferred that a certain degree of range including apexes of recesses of the waveform of the lower surface be designed so that the positions of the recesses in the longitudinal direction of the float are the same as those of the openings 12 and are present on the liquid surface even when the float sinks at the maximum. Note that, in the case where the support base 11 is a lid, and the lower surface thereof is not brought into contact with the liquid surface of the simple nutrient solution S, the lower surface of the lid is not necessarily formed in a waveform.

Further, even in the case where the support base 11 is a float, as illustrated in FIG. 5(d) and FIG. 5(e), a locking piece 11a may be formed at an edge, and the locking piece 11a may be locked onto an upper edge of the opening of the cultivation tank 10 so that the float serving as the support base 11 is used similarly to a lid 3 of the opening of the cultivation tank 10. With this, the float may be prevented from sinking below the liquid surface along with the growth of plants.

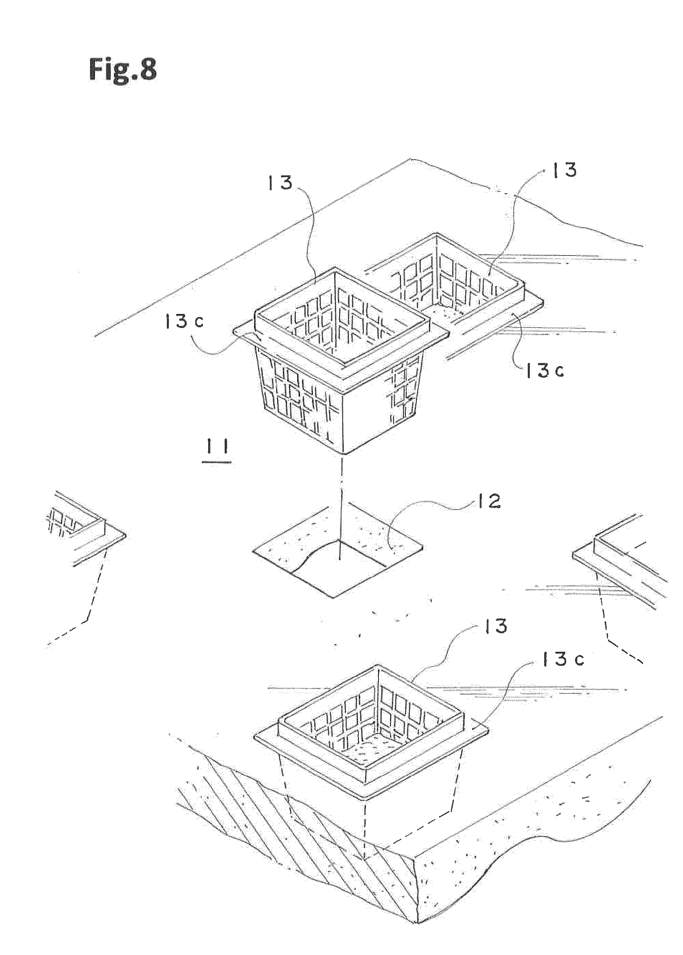

FIG. 6(a) and FIG. 6(b) are each a perspective view for illustrating an embodiment of the small cultivation pot. The small cultivation pot 13 according to this embodiment is a cultivation pot preferably used for cultivating plants having a relatively large weight, such as fruit vegetables and head-forming vegetables. The small cultivation pot 13 is formed into a cubic shape (box-like shape having a substantially square shape in plan view) having an opening in an upper portion, which is surrounded by peripheral side walls 13a that are formed upright at respective sides of a bottom surface 13b having a substantially square shape, and a plurality of openings or windows 17 (hereinafter collectively referred to as "windows") are formed into a lattice shape in each of the peripheral side walls 3a and the bottom surface 3b. As illustrated in FIG. 6(a), a flange 13c is formed to protrude from the peripheral edge of the upper end opening. It is preferred that the small cultivation pot 13 be molded integrally, for example, with a synthetic resin, but the small cultivation pot 13 is not limited thereto. An outer diameter of the small cultivation pot 13 is formed in conformity with the shape of the opening 12 of the support base 11, and may be matched to be fitted into the opening 12 of the support base 11 as illustrated in FIG. 8. When the small cultivation pot 13 is fitted into the opening 12 of the support base 11, the flange 13c is locked onto an upper surface of the support base 11 to be supported by the support base 11.

The medium 14 is held on the bottom surface 13b in the small cultivation pot 13, and roots of plants extend into the simple nutrient solution S through the plurality of windows 17 along with the growth. Thus, the small cultivation pot 13 is formed by determining the depth (size) thereof and the position of the flange 13c so that, when the small cultivation pot 13 is mounted to be fitted into the opening 12 of the support base 11, a lower portion thereof protrudes below the support base 11 and the lower portion and the medium 14 is entirely or partially soaked in the simple nutrient solution S.

FIG. 6(d) is the case where the flange 13c is formed to protrude from an intermediate point of the peripheral side wall 13a instead of the peripheral edge of the upper end opening of the small cultivation pot 13. Through regulation of the position for forming the flange 13c as described above, the protrusion amount of the small cultivation pot 13 below the support base 11 may be regulated, and the soaking amount thereof into the simple nutrient solution S may also be regulated.

The plurality of windows 17 formed in the peripheral side walls 13a and the bottom surface 13b of the small cultivation pot 13 serve as flow paths of the simple nutrient solution S flowing at a predetermined speed. Thus, it is sufficient that the windows 17 be shaped so that roots of plants may enter therethrough, that the simple nutrient solution S may pass therethrough, and that air may be distributed therethrough. The windows 17 are not limited to the lattice shape as in this example, and various other shapes may be employed. For example, there may be given a circle and polygonal shapes such as a triangle and a trapezoid.

Further, the medium 14 is held on the bottom surface 13b in the small cultivation pot 13, and plants are cultivated therein. Thus, on the periphery of the small cultivation pot 13 mounted on the support base 11, it is preferred that air be distributed to grown plants and sunlight be radiated thereto. Therefore, it is desired that the peripheral side wall 13a of the small cultivation pot 13 be formed into a tapered shape so that the outer diameter decreases as being shifted from an upper portion toward a lower portion. It is sufficient that the tapered shape be formed at least on the peripheral side walls 13a positioned in the vicinity of the opening 12 of the support base 11 when the small cultivation pot 13 is mounted on the support base 11, instead of the entire surface of the peripheral side wall 13a. With this, a gap is formed between the peripheral side walls 13a formed into a tapered shape and an inner side surface of the opening 12 of the support base 11, and a ventilation path is formed by the gap and the windows 17, thereby being capable of ensuring ventilation in root portions of plants, supplying oxygen, preventing germs, and increasing the amount of sunlight to be radiated to the plants.

In order to increase the distribution of air and the amount of sunlight to be radiated to the plants, the inner side surface of the opening 12 of the support base 11 may be cut away (not shown). When the peripheral side walls 13a are tapered and the inner side surface of the opening 12 is cut away, the effects are further enhanced synergistically.

Note that, the small cultivation pot 13 holds the medium 14 on the bottom surface 13b therein and is used for cultivating plants. Therefore, the shape of the small cultivation pot 13 is not limited to the shape described in this embodiment, and various cubic shapes having an opening in an upper portion may be employed. For example, there may be given a cylindrical body and a pyramid-like body. In this case, the shape of the opening 12 of the support base 11 is also adjusted to those shapes.

FIG. 7(a) and FIG. 7(b) are each a perspective view for illustrating an embodiment of the large cultivation pot. The large cultivation pot 13A according to this embodiment is a cultivation pot preferably used for cultivating plants having a relatively small weight, such as leaf vegetables, but it is needless to say that the large cultivation pot 13A may be employed for other plants. The large cultivation pot 13A according to this embodiment is different from the small cultivation pot 13 illustrated in FIGS. 6 in that the large cultivation pot 13A is an elongated rectangular parallelepiped body having an opening in an upper portion (box-like body having a rectangular shape in plan view), and the other configurations are the same as those of the small cultivation pot 13 illustrated in FIGS. 6. Therefore, like components are denoted by like reference symbols, and the other detailed descriptions are omitted. The large cultivation pot 13A has a rectangular shape in plan view, and hence the opening of the support base 11 also has a shape conforming thereto as illustrated in FIG. 5(c) and FIG. 5(e).

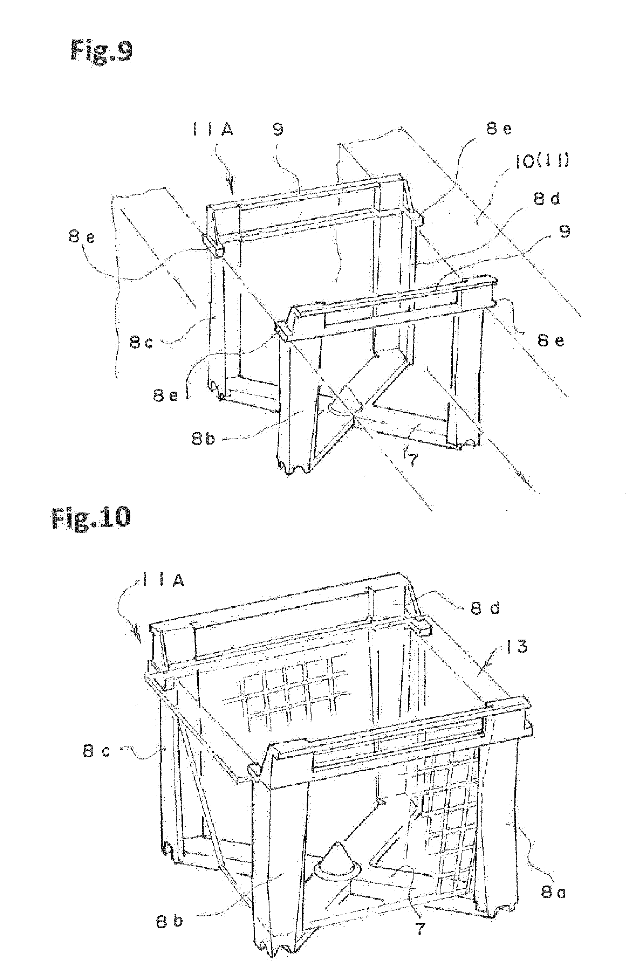

FIG. 9 is a perspective view for illustrating a support according to another embodiment of the present invention. The support is a cultivation pot receiving body 11A that is mounted in the cultivation tank 10 to receive the cultivation pots 13 and 13A. The cultivation pot receiving body 11A serving as the support is formed of a frame member. Vertical pieces 8a, 8b, 8c, and 8d are formed upright at respective ends of a substantially horizontal cross-shaped bottom piece 7, and upper ends of the vertical pieces 8a and 8b and upper ends of the vertical pieces 8c and 8d are connected to each other with connecting members 9 and 9, respectively. The cultivation pots 13 and 13A may be received in a range surrounded by the vertical pieces 8a, 8b, 8c, and 8d. The cultivation pot receiving body 11A includes flanges 8e each formed to protrude from upper portions of the vertical pieces 8a, 8b, 8c, and 8d, and the cultivation pot receiving body 11A is inserted into the cultivation tank 10 so as to be locked onto an edge portion of an opening thereof to be mounted thereon as illustrated in FIG. 9. The cultivation pot receiving body 11A may be inserted to be mounted in the opening 12 of the support base 11.

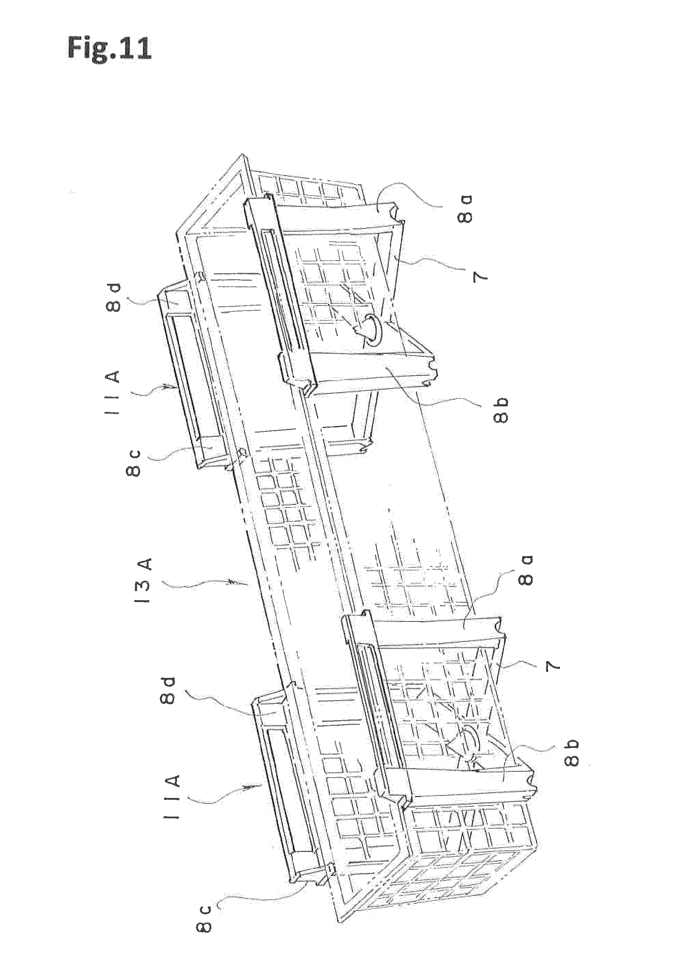

In the cultivation pot receiving body 11A thus mounted, the small cultivation pot 13 is used by being inserted in the range surrounded by the vertical pieces 8a, 8b, 8c, and 8d to be mounted on the bottom piece 7 as illustrated in FIG. 10. Regarding the large cultivation pot 13A, a plurality of cultivation pot receiving bodies 11A are mounted and the large cultivation pot 13A is mounted therebetween as illustrated in FIG. 11. In the case of the small cultivation pot 13, the cultivation pot receiving bodies 11A are used by being arranged in a plurality of rows, but one cultivation pot receiving body 11A may also be used.

The cultivation pot receiving body 11A is formed of a frame member, which is only surrounded by the vertical pieces 8a, 8b, 8c, and 8d that are formed upright. Therefore, even when the cultivation pot receiving body 11A is mounted in a state of receiving the cultivation pots 13 and 13A, a portion above the simple nutrient solution S becomes a space that allows good distribution of air and enables a satisfactory amount of sunlight to be radiated, which is preferred.

As illustrated in FIG. 4, the medium 14 is arranged in the cultivation pot 13. The medium 14 serves to support plants immediately after germination so that the plants do not fall into the simple nutrient solution S. As the material for the medium 14, materials used in the related-art hydroponic cultivation, for example, a urethane foam resin, rock wool, palm fibers, and incombustible paper may be used, but the material is not limited thereto. In the present invention, the medium 14 made of the same material may be used for all the plants, or the medium 14 made of a material that is different for each plant may also be used. It is preferred to use a medium, which is more inexpensive, as the medium 14 for plants that grow fast (a period of time from seeding to harvest is short), such as leaf vegetables, and it is not necessary to use a medium, which is more inexpensive, as the medium 14 for plants that grow slowly (a period of time from seeding to harvest is long), such as fruit vegetables and head-forming vegetables.

There is no limitation on the thickness and roughness of the medium 14, and it is sufficient that the thickness and roughness be set to such a degree that roots barely pass through the medium 14 in the process of the growth of plants. It is preferred that the thickness of the medium 14 be from about 1 cm to about 5 cm in accordance with the kind of plants to be cultivated.

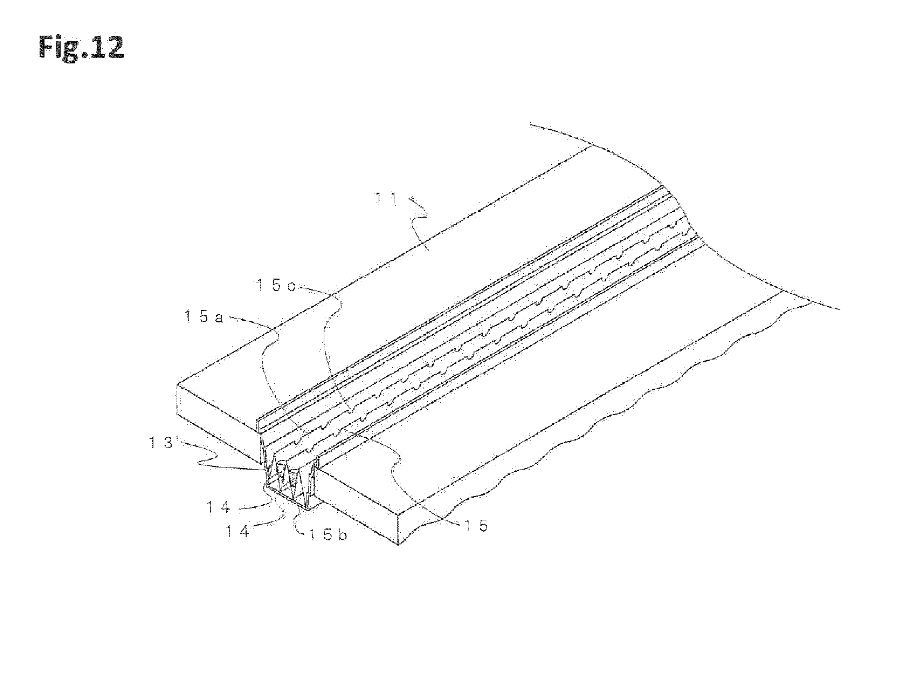

FIG. 12 is a view for illustrating a configuration of a support according to another embodiment of the present invention. In this embodiment, a cultivation sheet 15 is arranged in the large cultivation pot 13A illustrated in FIGS. 7. The cultivation sheet 15 is formed so that one sheet is folded into a bellows shape in a width direction of the large cultivation pot 13A to have a plurality of peaks 15a and valleys 15b extending in a longitudinal direction, and the medium 14 may be arranged between the peaks 15a and the valleys 15b. The medium 14 may also be arranged continuously in the longitudinal direction, or a plurality of media 14 may also be arranged at an interval. Cutaway portions 15c are formed in the peaks 15a at an appropriate interval in the longitudinal direction. Due to the cutaway portions 15c, even in an initial stage of growth in which the height of plants is smaller than the height from the valleys 15b to the peaks 15a, sunlight is radiated to the plants appropriately without being interrupted. Therefore, the plants can grow efficiently, and the appropriate radiation of sunlight to roots of the plants can be realized during cultivation. It is sufficient that a material for the cultivation sheet 15 do not absorb the simple nutrient solution S without chemically reacting with the simple nutrient solution S and have durability withstanding repeated use, and for example, a resin material such as polypropylene is preferably used.

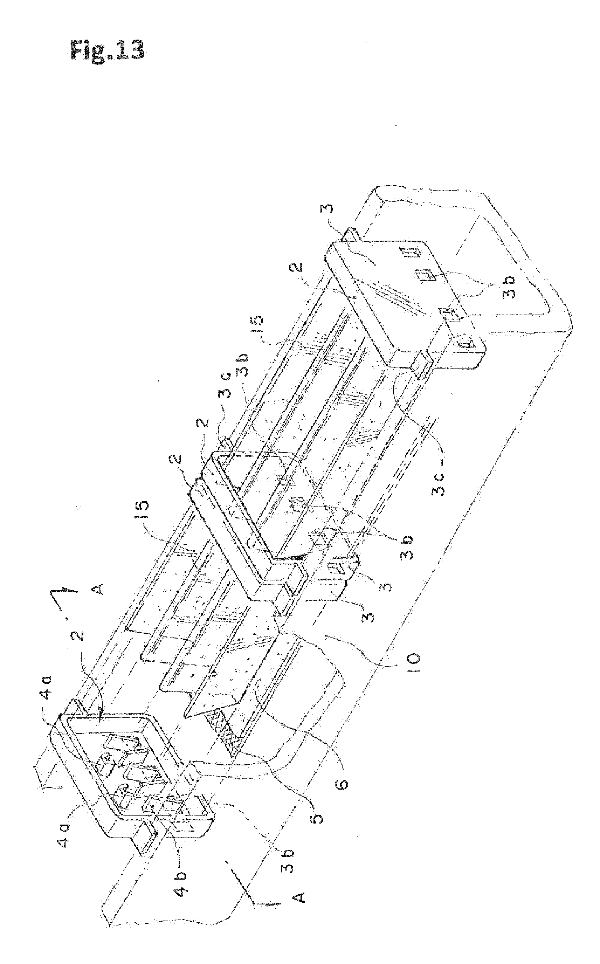

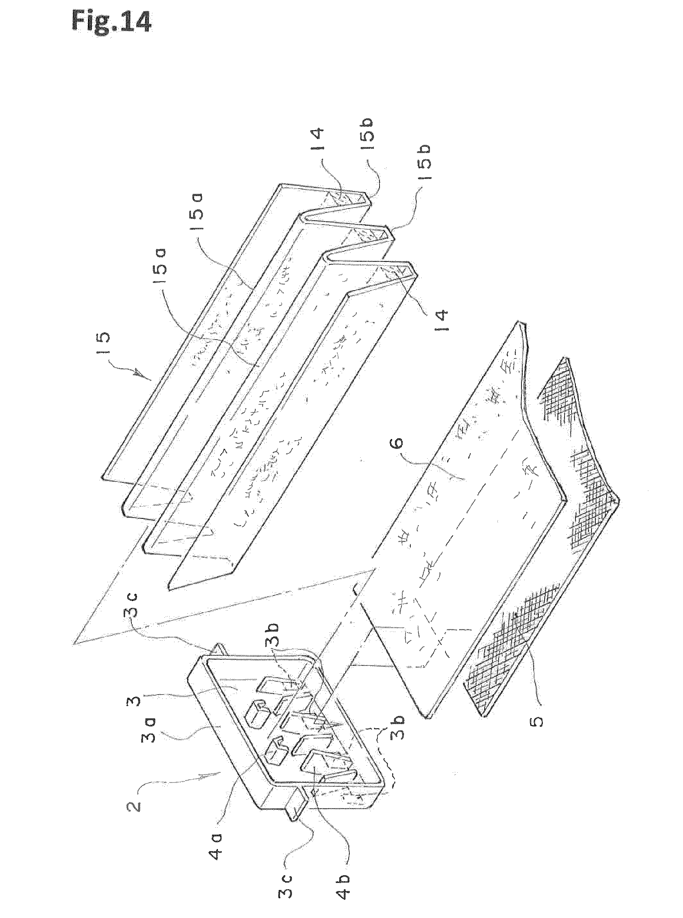

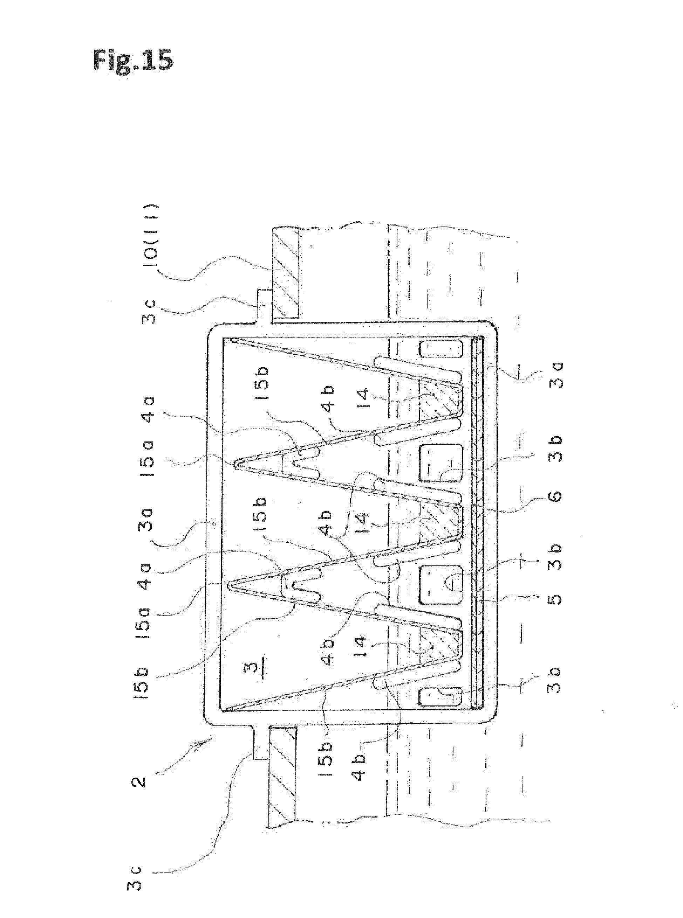

FIG. 13 to FIG. 15 are each a view for illustrating another mounting structure of the cultivation sheet. FIG. 13 is a partially cutaway perspective view thereof. FIG. 14 is an exploded perspective view thereof. FIG. 15 is a sectional view taken along the line A-A of FIG. 13.

The mounting structure of the cultivation sheet 15 according to this embodiment includes a sheet receiving plate 2. The sheet receiving plate 2 has a square short tubular shape in which a short wall 3a is formed upright on the peripheral edge of a square receiving plate main body 3, and sheet hanger members 4a and 4b are formed to protrude from an inner surface of the receiving plate main body 3. As illustrated in FIG. 14 and FIG. 15, the sheet hanger member 4a is formed to protrude into a mountain shape conforming to the peak of the cultivation sheet 15 at a position corresponding to a top of the peak 15a of the cultivation sheet 15. The sheet hanger member 4b is positioned at an intermediate point from the peak 15a to the valley 15b of the cultivation sheet 15 and is formed to protrude into a truncated chevron shape with an inclination conforming to an inclined surface of the cultivation sheet 15. Thus, when the peak 15a of the cultivation sheet 15 is fitted onto the sheet hanger member 4a, the sheet hanger member 4b abuts against an inner side of the inclined surface from the peak 15a to the valley 15b of the cultivation sheet 15 to support the inner side, with the result that the cultivation sheet 15 can be mounted only by being hung on the sheet hanger members 6a and 6b in the same way as in a hanger. Two sheet receiving plates 2 are arranged so as to face each other, and the cultivation sheet 15 is mounted by being bridged between the facing sheet receiving plates 2 and 2. Immediately below the cultivation sheet 15, a mesh plate 5 and nonwoven fabric 6 are installed on the short wall 3a of the sheet receiving plate 2 and bridged between the facing sheet receiving plates 2 and 2. Flanges 3c are formed in an upper portion on an outer peripheral side of the sheet receiving plate 2, and when the sheet receiving plate 2 is inserted from an opening of the cultivation tank 10, the flanges 3c can be locked and mounted onto an opening edge of the cultivation tank 10 as illustrated in FIG. 13 and FIG. 15. The sheet receiving plate 2 may be used by being inserted to be mounted through the elongated rectangular opening 12 even in the support base 11 serving as the support. When the sheet receiving plate 2 is used in the cultivation tank 10, the sheet receiving plate 2 is formed so that the width thereof is matched with the width of the opening of the cultivation tank 10. When the sheet receiving plate 2 is used in the support base 11, the sheet receiving plate 2 is formed so that the width thereof is matched with the width of the opening 12 of the support base 11.

In the receiving plate main body 3 of the sheet receiving plate 2, a plurality of openings 3b are formed so that the flow of the simple nutrient solution S is not inhibited. The size, number, and formation position of each of the openings 3b are determined so that the flow of the simple nutrient solution S is not inhibited. In this respect, as the receiving plate main body 3, a body having the openings 3b formed into a lattice shape or a mesh plate may also be employed.

### [Simple Nutrient Solution Circulation Means]

Referring again to FIG. 2, FIG. 2 is a view for illustrating the nutrient solution circulation means 40 of the plant cultivation system 1 and a flow path of the simple nutrient solution S. The nutrient solution circulation means 40 includes the discharge-side nutrient solution tank 41, nutrient solution circulation pumps 42, nutrient solution tubes 43, the supply-side nutrient solution tank 44, the nutrient solution supply paths 45, and the nutrient solution discharge paths 46.

As illustrated in FIG. 2, the simple nutrient solution S flows through each of the plurality of cultivation tanks 10 at a predetermined speed in a direction indicated by the arrow S and is discharged from the nutrient solution discharge path 46 formed in each of the cultivation tanks 10. The nutrient solution discharge path 46 may include a valve (not shown) for opening/closing the path as necessary so that the discharge amount of the simple nutrient solution S can be controlled precisely.

The simple nutrient solution S discharged from the cultivation tank 10 enters the discharge-side nutrient solution tank 41 preferably buried in the ground. The simple nutrient solution S in the discharge-side nutrient solution tank 41 is transported to the nutrient solution tube 43 with the nutrient solution circulation pump 42 and enters the supply-side nutrient solution tank 42 preferably buried in the ground. The simple nutrient solution S in the supply-side nutrient solution tank 42 is supplied to each of the plurality of cultivation tanks 10 through the nutrient solution supply path 45. The nutrient solution supply path 45 may include a valve (not shown) for opening/closing the path as necessary so that the supply amount of the simple nutrient solution S can be controlled precisely.

As described above, one of the features of the present invention is to create the "solid phase" similar to the state of soil in soil cultivation in the simple nutrient solution S, and the inventor of the present invention has found that, in order to achieve this feature, it is preferred that the predetermined speed of the simple nutrient solution S in the cultivation tank 10 be set to from about 3 cm/sec to about 5 cm/sec. This speed is a speed of the simple nutrient solution S adjusted so that a pressure applied to roots of plants is substantially the same as a pressure in soil. The predetermined speed may be adjusted, for example, by designing the height of the cultivation tank 10 in the uppermost stage, the diameter and length of the nutrient solution tube 43, and the capacities of the discharge-side nutrient solution tank 42 and the supply-side nutrient solution tank 44 with respect to the required amount of the simple nutrient solution S determined in accordance with the number and size of the cultivation tanks 10 to be used, and determining the ability of the nutrient solution circulation pump 42 so that the flow speed of the simple nutrient solution S in the cultivation tank 10 falls within the above-mentioned range under the above-mentioned design conditions. Further, in the case where a valve is provided in each of the nutrient solution supply path 45 and the nutrient solution discharge path 46, the predetermined speed may also be adjusted by adjusting an opening degree of each valve.

In the case where the flow speed of the simple nutrient solution S in the cultivation tank 10 is less than about 3 cm/sec, this state is substantially the same as the state in which the simple nutrient solution S is stagnated in the cultivation tank 10. Therefore, the same pressure as that in soil is not applied to the roots, and in addition, the stagnation may cause the degradation in nutrient solution. In the case where the flow speed is more than about 5 cm/sec, the pressure applied to the roots is too high, and hence excessive stress may be applied to the roots.

In the present invention, the simple nutrient solution S is not degraded. Therefore, the simple nutrient solution S is not required to be discarded highly frequently, and it is generally sufficient that water and/or nutrients lost due to the absorption by plants or natural evaporation be replenished as necessary. The degradation in the simple nutrient solution S can be prevented by completely mixing and circulating the simple nutrient solution S through the flow path and preventing the stagnation thereof in the flow path. The complete mixing and prevention of stagnation of the simple nutrient solution S in the flow path are achieved mainly by employing the following configurations:
(1) configuration for preventing the stagnation in the cultivation tank;
(2) configuration for homogeneously mixing a nutrient solution in a nutrient solution tank and preventing the stagnation thereof in the tank; and
(3) configuration for further uniformly mixing the nutrient solution in a nutrient solution tube.

Of those, the configuration (1) has been described in the descriptions of the cultivation tank and the support. The configurations (2) and (3) are described in the following descriptions of the nutrient solution tank and the nutrient solution tube.

### [Nutrient Solution Tank]

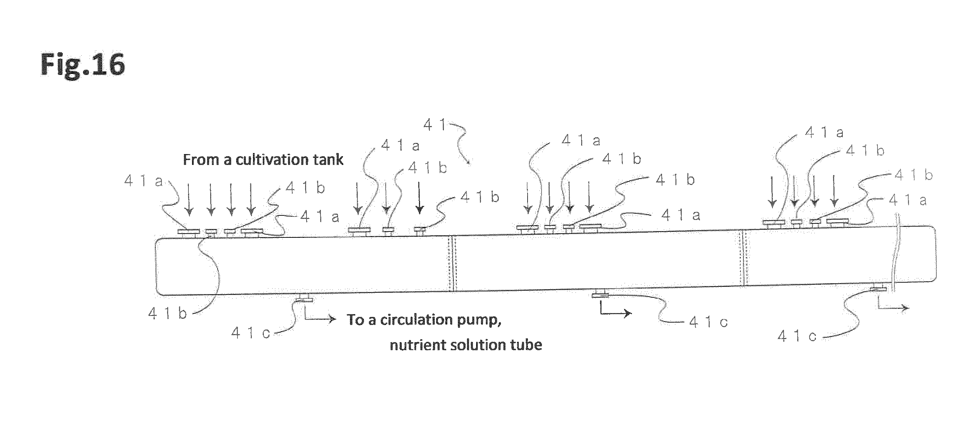

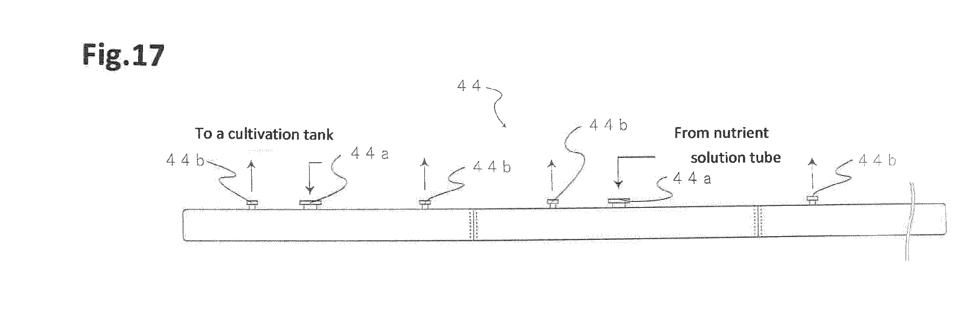

FIG. 16 is a view for illustrating the discharge-side nutrient solution tank 41 used in one embodiment of the present invention, and FIG. 17 is a view for illustrating the supply-side nutrient solution tank 44. In the tanks 41 and 44 illustrated in FIG. 16 and FIG. 17, the double wavy line at the right end indicates that part of the elongated tanks 41 and 44 is omitted, and the omitted part has the same structure as that explicitly illustrated in FIG. 16 and FIG. 17. As illustrated in FIG. 2, FIG. 3, and FIG. 4, the simple nutrient solution S discharged from each of the plurality of cultivation tanks 10 enters the discharge-side nutrient solution tank 41 through the nutrient solution discharge path 46. Further, the simple nutrient solution S is supplied to each of the plurality of cultivation tanks 10 from the supply-side nutrient solution tank 44 through the nutrient solution supply path 45.

In this embodiment, the discharge-side nutrient solution tank 41 is arranged horizontally so as to extend in a direction in which the longitudinal direction of the tank 41 intersects with the longitudinal direction of the cultivation tank 10 below the discharge side of the simple nutrient solution S from the cultivation tank 10. Further, the supply-side nutrient solution tank 44 is arranged horizontally so as to extend in a direction in which the longitudinal direction of the tank 44 intersects with the longitudinal direction of the cultivation tank 10 below the supply side of the simple nutrient solution S to the cultivation tank 10. When the nutrient solution tanks 41 and 44 are arranged as described above, the flows of the simple nutrient solution S discharged from the different cultivation tanks 10 are mixed in the same discharge-side nutrient solution tank 41, and the flows of the simple nutrient solution S entering from the nutrient solution tubes 43 are further mixed in the same supply-side nutrient solution tank 44. Therefore, the uniformly mixed simple nutrient solution S circulates through the nutrient solution circulation path. The materials for the discharge-side nutrient solution tank 41 and the supply-side nutrient solution tank 44 are not particularly limited as long as the materials do not chemically react with the nutrients contained in the simple nutrient solution S and have pressure resistance. In one embodiment, it is preferred that the discharge-side nutrient solution tank 41 and the supply-side nutrient solution tank 44 be formed of a tank made of polyvinyl chloride having an outer side reinforced with fiber reinforced plastic.

It is preferred that the discharge-side nutrient solution tank 41 and the supply-side nutrient solution tank 44 have a cylindrical shape so that the simple nutrient solution S is more uniformly mixed in the discharge-side nutrient solution tank 41 and the supply-side nutrient solution tank 44. It is preferred that the length of each of the nutrient solution discharge-side tank 41 and the supply-side nutrient solution tank 44 be substantially the same as the distance between the cultivation tanks 10 at both ends so that the flows of the simple nutrient solution S discharged from the cultivation tanks 10 at both ends in the plurality of cultivation tanks 10 arranged in parallel enter portions close to both end portions of the tanks 41 and 44 as illustrated in FIG. 2. It is preferred that the diameter of the supply-side nutrient solution tank 44 be smaller than that of the discharge-side nutrient solution tank 41 so that the supply-side nutrient solution tank 44 serves as a pressure tank for sending the simple nutrient solution S in the tank 44 under an increased pressure to the cultivation tank 10. In one embodiment, the discharge-side nutrient solution tank 41 has an inner diameter of about 400 mm and withstands an internal pressure of 5 kg/cm², and the supply-side nutrient solution tank 44 has an inner diameter of about 200 mm and withstands an internal pressure of 10 kg/cm². It is preferred that the discharge-side nutrient solution tank 41 and the supply-side nutrient solution tank 44 both be buried in the ground so that the temperature of the simple nutrient solution S can be managed more stably.

As illustrated in FIG. 16, the discharge-side nutrient solution tank 41 used in the present invention includes a plurality of solution receiving ports 41a and 41b for receiving the simple nutrient solution S discharged from the plurality of cultivation tanks 10, and a plurality of solution sending ports 41c for sending the simple nutrient solution S in the tank 41 to the nutrient solution tubes 43. It is preferred that the plurality of solution receiving ports 41a and 41b be formed on an upper portion of the tank 41 arranged horizontally below the cultivation tank 10, and the plurality of solution sending ports 41c be formed on a lower portion of the tank. When the solution receiving ports 41a and 41b and the solution sending ports 41c have the above-mentioned positional relationship, the simple nutrient solution S in the discharge-side nutrient solution tank 41 can be uniformly mixed and sent to the nutrient solution tube 43 without stagnation in the discharge-side nutrient solution tank 41.

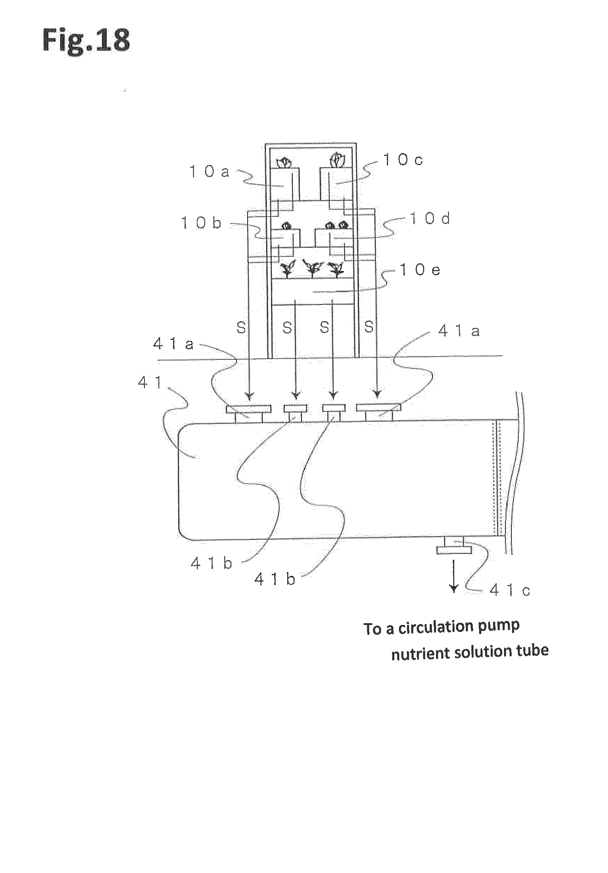

The number and diameter of the solution receiving ports 41a and 41b may be appropriately designed in accordance with the number and stage number of the cultivation tanks 10 arranged in parallel. In one embodiment, the solution receiving ports 41a and 41b may be arranged on an upper portion of the tank 41, with one or the plurality of solution receiving ports 41a and 41b corresponding to each row of the plurality of rows of the cultivation tanks 10 arranged in parallel being defined as one unit. That is, one unit of the solution receiving ports 41a and 41b are formed on the tank 41 for each row of the cultivation tanks 10. In each unit of the solution receiving ports 41a and 41b, the number of the solution receiving ports 41a having a large diameter and the number of the solution receiving ports 41b having a small diameter are determined in accordance with the stage number in the corresponding row of the cultivation tanks 10. For example, in the case of a row in which five cultivation tanks 10a to 10e are formed in three stages as illustrated in FIG. 18, the simple nutrient solution S discharged from each of the two cultivation tanks 10a and 10b in the upper stages flows into the solution receiving port 41a positioned on the leftmost side of FIG. 18. The simple nutrient solution S discharged from each of the two cultivation tanks 10c and 10d in the upper stages flows into the solution receiving port 41a positioned on the rightmost side of FIG. 18. The simple nutrient solution S discharged from the cultivation tank 10e in the lowermost stage flows into the solution receiving ports 41b having a diameter smaller than that of the solution receiving ports 41a. In this embodiment, the cultivation tank 10 includes the two discharge ports 16a and 16b as described above, and hence the flows of the nutrient solution S discharged from the discharge ports 16a and 16b of the cultivation tank 10 in the upper stages are collected into one flow to flow into the corresponding solution receiving port 41a. Further, the flows of the nutrient solution S discharged from the two discharge ports 16a and 16b of the cultivation tank 10e flow into the separate solution receiving ports 41b. Thus, when the number and diameter of the solution receiving ports 41a and 41b in each unit are determined in accordance with the configuration of the cultivation tank 10 and the amount and fall distance of the simple nutrient solution S discharged from the cultivation tank 10, the flow speed of the simple nutrient solution S in the cultivation tank 10 can be maintained at a predetermined speed more easily by reducing the flow resistance during discharge, and the simple nutrient solution S may be uniformly mixed in the discharge-side nutrient solution tank 41 with the simple nutrient solution S flowing thereto.

It is preferred that the solution receiving ports 41a and 41b for the simple nutrient solution S discharged from the cultivation tanks 10 at both ends of the plurality of cultivation tanks 10 arranged in parallel be formed at positions close to both end portions of the discharge-side nutrient solution tank 44 to the extent possible. When the solution receiving ports 41a and 41b are arranged at those positions, the flows of the simple nutrient solution S flowing into the discharge-side nutrient solution tank 41 from the solution receiving ports 41a and 41b wash away the nutrient solution in corner portions in the both end portions of the discharge-side nutrient solution tank 41, and as a result, the stagnation of the simple nutrient solution S in the corner portions can be prevented.

As illustrated in FIG. 17, the supply-side nutrient solution tank 44 used in the present invention includes a plurality of solution receiving ports 44a for receiving the simple nutrient solution S sent from the nutrient solution tubes 43, and a plurality of solution sending ports 44b for sending the simple nutrient solution S in the tank 44 to the cultivation tanks 10. It is preferred that the plurality of solution receiving ports 44a and the plurality of solution sending ports 44b be formed on an upper portion of the tank 44 arranged horizontally below the cultivation tank 10. When the solution receiving ports 44a and the solution sending ports 44b have such positional relationship, the simple nutrient solution S in the supply-side nutrient solution tank 44 can be uniformly mixed and sent to the cultivation tank 10.

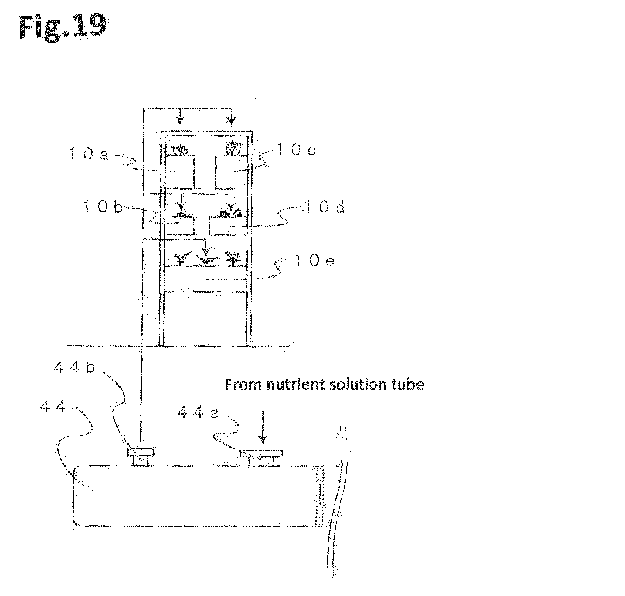

The number and diameter of the solution receiving ports 44a and the solution sending ports 44b can be appropriately designed in accordance with the number and stage number of the cultivation tanks 10. In one embodiment, one solution sending port 44b may be formed on the upper portion of the tank 44, corresponding to each row of the plurality of rows of the cultivation tanks 10 arranged in parallel. Further, it is preferred that the solution receiving ports 44a be formed on the supply-side nutrient solution tank 44 in the same number as that of the solution sending ports 41c of the discharge-side nutrient solution tank 41 in conformity with the tube form of the nutrient solution tube 43 described later. The simple nutrient solution S sent from the solution sending port 44b is supplied to the plurality of cultivation tanks 10, for example, as illustrated in FIG. 19.

### [Nutrient Solution Tube]

The simple nutrient solution S, which is uniformly mixed in the discharge-side nutrient solution tank 41 and discharged from the solution sending port 41c, is sent to the nutrient solution tube 43 with the nutrient solution circulation pump 42 as illustrated in FIG. 2. It is preferred that one nutrient solution circulation pump 42 be provided to each of the plurality of solution sending ports 41c of the discharge-side nutrient solution tank 41. The simple nutrient solution S is transported to the supply-side nutrient solution tank 41 through the nutrient solution tube 43. It is preferred that the nutrient solution tube 43 be buried in the ground from the viewpoint of the temperature management of the simple nutrient solution S. The material for the nutrient solution tube 43 is not particularly limited as long as the material does not chemically react with the nutrients contained in the simple nutrient solution S and has pressure resistance to some degree. In one embodiment, as the nutrient solution tube 43, there may be given a tube made of polyvinyl chloride having an outer side reinforced with fiber reinforced plastic.

As described above, an attempt is made in the discharge-side nutrient solution tank 41 so that the simple nutrient solution S is uniformly mixed therein. However, various plants are cultivated in each of the plurality of cultivation tanks 10, and the consumption amount of the nutrients of the simple nutrient solution S and oxygen, the kind and amount of root acids secreted from roots of plants, and the like vary depending on the cultivation tank 10. Therefore, the simple nutrient solution S discharged from each row of the cultivation tanks 10 arranged in parallel may significantly vary in the state thereof, for example, the amount of contained nutrients, the dissolved-oxygen concentration, and the amount of root acids. In particular, the simple nutrient solution S discharged from the cultivation tank 10 in which fruit vegetables are cultivated and the simple nutrient solution S discharged from the cultivation tank 10 in which leaf vegetables are cultivated significantly vary in the state thereof. Thus, it is also considered that the above-mentioned attempt described in the description of the tank 41 may be insufficient for maintaining the uniform mixed state of the simple nutrient solution S discharged from the cultivation tank 10 into the discharge-side nutrient solution tank 41. Therefore, in the present invention, the nutrient solution tubes 43 through which the simple nutrient solution S flows are crossed in a region from the discharge-side nutrient solution tank 41 to the supply-side nutrient solution tank 44.

A method for the crossing is specifically described with reference to FIG. 2. For example, the simple nutrient solution S, which is discharged from the uppermost cultivation tank 10 in FIG. then 2 to enter the discharge-side nutrient solution tank 41 and is discharged from the solution sending port 41c closest to that position, passes through the nutrient solution tube 43 and enters the supply-side nutrient solution tank 44 from the solution receiving port 44a positioned close to the lowermost cultivation tank 10 in FIG. 2. Meanwhile, for example, the simple nutrient solution S, which is discharged from the lowermost cultivation tank 10 in FIG. 2 to enter the discharge-side nutrient solution tank 41 and is then discharged from the solution sending port 41c closest to that position, passes through the nutrient solution tube 43 and enters the supply-side nutrient solution tank 44 from the solution receiving port 44a positioned close to the uppermost cultivation tank 10 in FIG. 2. Thus, in the present invention, the paths of the nutrient solution tube 43 from the discharge-side nutrient solution tank 41 to the supply-side nutrient solution tank 41 are arranged to be crossed so that the simple nutrient solution S discharged from the cultivation tank 10 is uniformly mixed as a whole to the extent possible.

### [Air Reforming Means, Reformed Air Temperature Adjusting Means, and Reformed Air Supply Means]

In FIG. 1 and FIG. 2, the reformed air production means 20 used in the plant cultivation system 1 is illustrated. The reformed air production means 20 is a mechanism for reforming outside air into reformed air RA suitable for being supplied to the simple nutrient solution S in the cultivation tank 10, and adjusting the temperature of the reformed air RA. The reformed air RA is obtained by reforming air A into a state having a high oxygen content. The reformed air production means 20 may be provided inside or outside of the house 60, but it is preferred that the reformed air production means 20 be provided outside of the house 60 from the viewpoint of further reducing a space required for the temperature management in the house 60. In the case where the reformed air production means 20 is provided outside of the house 60, it is preferred that, for example, a facility required in a closed space be arranged so as to reduce the influence of outside air to the extent possible. The reformed air RA reformed and adjusted in temperature by the reformed air production means 20 is supplied to the simple nutrient solution S in the cultivation tank 10 by the reformed air supply means 30.

The reformed air production means 20 includes an air intake portion 21, air reforming means 22, a suction fan 23, a reformed air storage chamber 24, a geothermal heat utilization heat pump 25, a heat release portion 26, a tube cooling portion 27, and temperature sensors 28. The air A is taken into the reformed air storage chamber 24 with the suction fan 23 through the air intake portion 21. The air A is reformed by the air reforming means 22 before being taken into the reformed air storage chamber 24. In one embodiment, as the air reforming means 22, a filter portion 22 having at least a denitrification filter may be used. When the air A is taken into the reformed air storage chamber 24 through the denitrification filter, the reformed air RA reformed into a state having a high oxygen content per unit volume with nitrogen removed can be obtained. The air reforming means 22 may further include various filters such as a deammoniation filter, a desalting filter, and a dustproof filter. In another embodiment, the oxygen content of the reformed air RA may also be increased, for example, by mixing pure oxygen with the taken air, and in this case, as the air reforming means 22, a device for mixing outside air and pure oxygen may be used.

It is preferred that the reformed air RA taken into the reformed air storage chamber 24 be stored in the reformed air storage chamber 24 for a predetermined period of time for the purpose of stabilizing the supply amount and adjusting the temperature. The detail of the temperature adjustment is described later. The capacity of the reformed air storage chamber 24 is determined in consideration of the stability of the supply amount and the ease of the temperature management, and it is preferred that the capacity of the reformed air storage chamber 24 be at least a capacity that is 10 times or more of the amount of the reformed air RA per unit time to be supplied to the cultivation tank 10. In order to further facilitate the temperature adjustment of the inside reformed air RA, it is preferred that wall surfaces, a roof, a door, and the like of the reformed air storage chamber 24 have a heat insulation function.

The reformed air RA is supplied to the plurality of cultivation tanks 10 by the reformed air supply means 30. The reformed air supply means 30 includes a reformed air supply pump 32, reformed air tubes 34, and the reformed air supply portions 36. The reformed air RA is sent to the reformed air tube 34 by the reformed air supply pump 32 after being stored in the reformed air storage chamber 24. It is preferred that the pressure applied to the reformed air RA with the reformed air supply pump 32 be set so that the flow rate per hour of the reformed air RA ranges from about 3 times to about 5 times with respect to the entire volume of the circulating simple nutrient solution S. The reformed air tube 34 may be arranged outside of the cultivation tank 10 as illustrated in FIG. 2 but may be arranged so as to pass through the cultivation tank 10. When the reformed air tube 34 is arranged in the cultivation tank 10, that is, in the simple nutrient solution S, there is an advantage in that the reformed air tube 34 serves as a heat accumulating body and the temperature of the simple nutrient solution S can therefore be maintained more stably. There is no particular limitation on the material for the reformed air tube 34, and in the case where the reformed air tube 34 is arranged in the cultivation tank 10, a material that does not chemically react with the simple nutrient solution S, for example, polyvinyl chloride or the like is preferably used. A valve (not shown) for opening/closing the tube may be provided between the reformed air supply tube 34 and the reformed air supply portion 36. When the valve is provided, the supply amount of the reformed air RA to the reformed air supply portion 36 can be controlled more precisely.

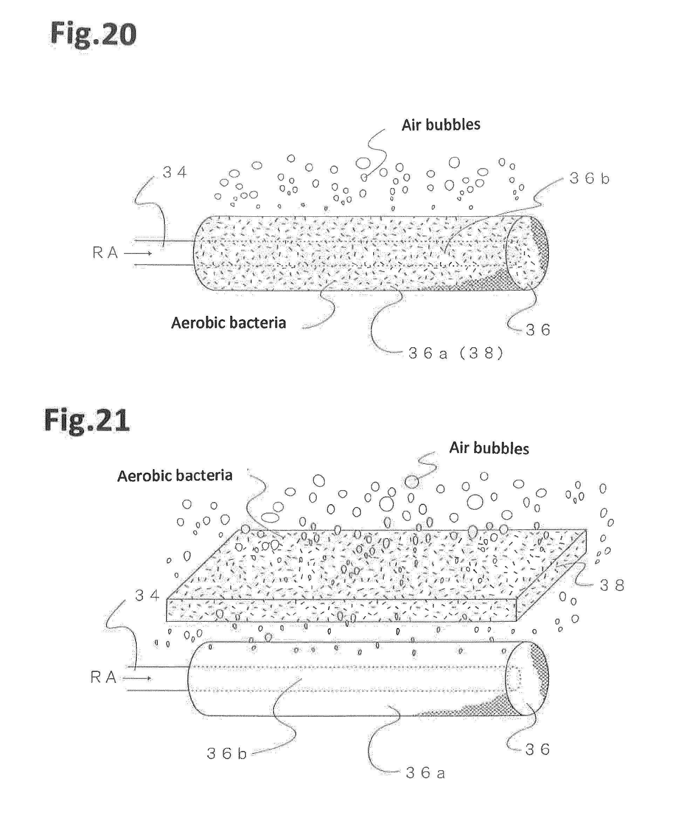

The reformed air supply portion 36 is arranged in each of the cultivation tanks 10. There is no particular limitation on the reformed air supply portion 36 as long as the reformed air supply portion 36 can supply the reformed air RA to the simple nutrient solution S. In one embodiment, it is preferred that the reformed air supply portion 36 be a porous body having a hollow tubular shape obtained by firing ceramics at high temperature as illustrated in FIG. 20. The reformed air tube 34 is connected to a hollow portion 36b formed along a center axis line in a longitudinal direction in a tubular porous body 36a, and the reformed air RA having entered the hollow portion 36b is released from pores of the porous body 36a into the simple nutrient solution S as air bubbles each having a size corresponding to the size of the pore. It is preferred that the pores of the porous body 36a be uniform to the extent possible, and the size of each pore be set so that the size of each air bubble released into the simple nutrient solution S is substantially larger than the order of hundreds of microns and smaller than the order of several millimeters. When the reformed air RA is supplied to the simple nutrient solution S through use of the air bubbles each having a size of the above-mentioned level, the required dissolved-oxygen concentration, that is, the range of from about 8 ppm to about 12 ppm can be achieved more easily. The air bubbles each having a size smaller than the order of hundreds of microns cause increase in intake amount of nitrogen contained in the simple nutrient solution S, and hence the required dissolved-oxygen concentration may not be achieved. Further, the air bubbles each having such small size are not preferred because there is a risk in that the air bubbles may have an impact on roots when striking the roots to be ruptured. The air bubbles each having a size larger than the order of several millimeters have a small specific surface area, and the stagnation time thereof in the simple nutrient solution S is short. Therefore, sufficient oxygen may not be supplied to the simple nutrient solution S. The porous body 36a is available from manufacturers of ceramics products on the market. When the porous body 36a of ceramics is used as the reformed air supply portion 36, there is also an advantage in that the porous body 36a serves as a heat accumulating body, which is further advantageous in maintaining the simple nutrient solution S at a predetermined temperature.

A method for arrangement of the reformed air supply portions 36 is not limited, and it is preferred that the reformed air supply portions 36 be arranged at a predetermined interval on a bottom of the cultivation tank 10. In the case where the reformed air supply portion 36 is the porous body 36a, it is preferred that the porous body 36a be arranged in a direction in which the longitudinal direction of the porous body 36a extends in a width direction of the cultivation tank 10. With such arrangement, the flowing simple nutrient solution S strikes a side surface of the porous body 36a to enter therein and is released together with the reformed air RA from the porous body 36a. Therefore, there is an advantage in that the oxygen supply efficiency to the simple nutrient solution S is further increased.

The length, diameter, and arrangement interval of the reformed air supply portions 36 are appropriately selected so that the dissolved-oxygen concentration with respect to the simple nutrient solution S becomes a required value in accordance with the width and depth of the cultivation tank 10 and the flow speed of the simple nutrient solution S. In one embodiment, the reformed air supply portion 36, that is, the porous body may have a length of from about 10 cm to about 50 cm and a diameter of from about 2 cm to about 5 cm, and the arrangement interval thereof may be set to about 50 cm, depending on a place. The reformed air supply portion 36 having a length smaller than the width of the cultivation tank 10 may also be used, and in this case, it is preferred that the reformed air supply portions 36 be arranged alternately from side to side in the longitudinal direction of the cultivation tank 10.

### [Reformed Air Temperature Adjusting Means]

The reformed air RA taken into the reformed air storage chamber 24 is supplied to the cultivation tank 10, and in order to maintain the temperature of the reformed air RA supplied to the cultivation tank 10 at a predetermined temperature, that is, from about 18°C to about 22°C irrespective of the temperature of outside air to be taken in, the following method is employed in one embodiment. Note that, a method of maintaining the temperature of the reformed air RA supplied to the cultivation tank 10 at a predetermined temperature, which can be used in the present invention, is not limited to the following method, and the temperature of the reformed air RA may be maintained at a predetermined temperature by any one of other publicly known methods, for example, through use of a commercially available boiler or an air-conditioning device. However, the inventor of the present invention considers that the reformed air RA can be maintained at a predetermined temperature efficiently and a reliably while reducing the use amount of energy through use of the following method.

In this embodiment, in order to maintain the temperature of the reformed air RA at a predetermined temperature when outside air is taken in and finally supplied to the cultivation tank 10 through intermediate facilities such as the reformed air supply pump 32 and the reformed air tube 35, the temperature of the reformed air RA is adjusted so as to compensate for a change in temperature of the reformed air RA in the intermediate facilities in consideration of the change in temperature. In this embodiment, the reformed air temperature adjusting means for setting the reformed air RA at a predetermined temperature may include the earth tube 21, the reformed air storage chamber 24, the geothermal heat utilization heat pump 25, the heat release portion 26 arranged in the reformed air storage chamber 24, a control device (not shown) for controlling the set temperature of the geothermal heat utilization heat pump 25, and the tube cooling portion 27. Heat from the geothermal heat utilization heat pump 25 is released into the reformed air storage chamber 24 by the heat release portion 26, and the temperature in the storage chamber 24 is maintained at a predetermined temperature with this heat. The geothermal heat utilization heat pump 25 is used for utilizing geothermal heat that is relatively stable year-round as a heat source for adjusting the temperature in the reformed air storage chamber 24, and a geothermal heat pump unit available on the market may be appropriately used.

In this embodiment, first, an earth tube is used as the air intake portion 21, and outside air is introduced into the reformed air storage chamber 24 after passing through the earth tube 21. When outside air is introduced through the earth tube 21 buried in the ground having stable temperature, the temperature of outside air at high temperature can be decreased in summer and the temperature of outside air at low temperature can be increased in winter. For example, the temperature of air introduced into the reformed air storage chamber 24 through the earth tube 21 can be stabilized at from about 7°C to about 10°C year-round.

For example, the reformed air RA taken into the reformed air storage chamber 24 through the air reforming means 22 including a denitrification filter is set to a predetermined temperature by being stored for an appropriate period of time in the reformed air storage chamber 24 with its inside maintained at a predetermined temperature. The temperature in the reformed air storage chamber 24 is adjusted by setting the temperature of the geothermal heat utilization heat pump 25 so that the temperature of the reformed air RA supplied to the cultivation tank 10 reaches a predetermined temperature, in consideration of increase in temperature in the reformed air supply pump 32 described later and a change in temperature in the reformed air tube 34. That is, in the case where the temperature of the reformed air RA supplied to the cultivation tank 10 becomes higher than the predetermined temperature due to the increase in temperature in the reformed air supply pump 32 and the change in temperature in the reformed air tube 34, the set temperature of the geothermal heat utilization heat pump 25 is changed so that the temperature in the reformed air storage chamber 24 decreases by the amount of increase in temperature. In contrast, in the case where the temperature of the reformed air RA supplied to the cultivation tank 10 becomes lower than the predetermined temperature due to the increase in temperature in the reformed air supply pump 32 and the change in temperature in the reformed air tube 34, the set temperature of the geothermal heat utilization heat pump 25 is changed so that the temperature in the reformed air storage chamber 24 increases by the amount of decrease in temperature. It is preferred that the set temperature of the geothermal heat utilization heat pump 25 be changed automatically based on the temperature data from the temperature sensor 28 provided in the reformed air tube 34 immediately before the reformed air RA is sent into the cultivation tank 10.

The reformed air RA adjusted in temperature in the reformed air storage chamber 24 is sent to the reformed air tube 34 by the reformed air supply pump 32. In order to achieve the required dissolved-oxygen concentration in the present invention, it is necessary to supply a large amount of the reformed air RA, and for this purpose, the discharge pressure of the pump 32 needs to be set to a high pressure. This pressure may be determined in accordance with the supply amount of air. The reformed air RA having a pressure applied thereto as described above is compressed, with the result that the temperature thereof increases by, for example, from about 10°C to about 15°C. When the discharge pressure of the pump 32 is maintained constant year-round, a range of temperature increase caused by the compression of the reformed air RA can be made constant. The tube cooling portion 27 may be provided on a downstream side of the pump 32, and in the case where the temperature of the reformed air RA is increased excessively with the pump 32, the temperature may also be decreased with the tube cooling portion 27.

The reformed air RA sent from the reformed air supply pump 32 is supplied to the reformed air supply portion 36 through the reformed air tube 34. The temperature of the reformed air RA may be changed due to the influence of the temperature outside of the tube while the reformed air RA flows through the reformed air tube 34. It is preferred that the reformed air tube 34 be buried in the ground, be formed of a heat insulating material, and/or be arranged in the cultivation tank 10 so that the inside reformed air RA is not influenced by the temperature outside of the tube to the extent possible. The increase in temperature caused by outside air in part of a ground tube portion may also be cancelled with the tube cooling portion 29.

Through use of the above-mentioned method, the reformed air RA maintained at a predetermined temperature year-round can be obtained from outside air having a temperature that varies significantly depending on the seasons by adjusting the temperature through use of the reformed air temperature adjusting means.

### [Bacterial Colonization Portion]

As described above, in hydroponic cultivation, it is important how to allow aerobic bacteria to exhibit functions thereof while appropriately colonizing aerobic bacteria in a required portion in the simple nutrient solution S flowing at a predetermined speed. In the present invention, there is provided a bacterial colonization portion 38 for allowing aerobic bacteria to be retained to inhabit or propagate in the simple nutrient solution S in the cultivation tank 10. Further, the reformed air supply portion 36 and the bacterial colonization portion 38 are arranged so as to be close to each other so that aerobic bacteria inhabiting the bacterial colonization portion 38 exhibit functions thereof sufficiently through use of the reformed air RA maintained at a predetermined temperature. The reformed air supply portions 36 are arranged at a predetermined interval in the cultivation tank 10 as described above, and hence the bacterial colonization portions 38 close to the reformed air supply portions 36 are also arranged evenly in the simple nutrient solution S in the cultivation tank 10. As a result, a uniform amount of aerobic bacteria can be ensured in the entire cultivation tank 10. The material for the bacterial colonization portion 38 is not particularly limited as long as the material allows aerobic bacteria to be colonized and does not chemically react with the simple nutrient solution S, and for example, the same medium as the medium 14 in the above-mentioned support or porous ceramics may be used.

In one embodiment, as illustrated in FIG. 20, the porous ceramics 36a of the reformed air supply portion 36 may be used as the bacterial colonization portion 38. In this embodiment, fine pores of the porous ceramics 36a serve as places for inhabitation and propagation of aerobic bacteria, and hence aerobic bacteria do not flow out easily even in the flowing simple nutrient solution S. Further, when the reformed air RA having a high oxygen concentration supplied from the reformed air tube 34 to the reformed air supply portion 36 is sent into the simple nutrient solution S through the pores of the porous ceramics 36a, sufficient oxygen can be supplied to aerobic bacteria inhabiting or propagating in the pores of the porous ceramics 36a.

In another embodiment, as illustrated in FIG. 21, the bacterial colonization portion 38 may be formed into a rectangular plate shape having a long side corresponding to the length of the reformed air supply portion 36, and may be arranged, for example, immediately above the reformed air supply portion 36 so that the reformed air RA supplied from the reformed air supply portion 36 is sufficiently supplied to colonized aerobic bacteria. Note that, in the case of this embodiment, a space is formed between the reformed air supply portion 36 and the bacterial colonization portion 38, thereby causing a risk in that the simple nutrient solution S may be stagnated in the space.

### [Management of Entire System]

In the plant cultivation system 1, in order to simultaneously produce wide variety of plants year-round, it is necessary to monitor the state of the entire system and appropriately control the state as necessary. As the state to be monitored in the plant cultivation system 1, first, there may be given the management of the temperature, humidity, and light in the house 60, and it is necessary to manage those states in an atmosphere suitable for cultivating plants. In the plant cultivation system 1, plants are cultivated through use of sunlight, and hence the temperature in the house 60 needs to be prevented from increasing excessively particularly in summer. In the system 1, it is preferred that the temperature and humidity inside and outside of the house 60 be monitored constantly. In the house 60, a plurality of windows and ventilation fans are provided on side walls and a ceiling. In the case where the temperature and/or humidity deviate from the appropriate range of temperature and humidity based on the monitoring data of the temperature and humidity, for example, in the case where the temperature reaches 20°C or more and the humidity reaches 60% or more, the house 60 is ventilated by opening/closing those windows and operating the ventilation fans. Further, in this embodiment, the temperature and humidity in the house 60 may also be controlled through use of the in-house cooling means 50 including a filter 52, an earth tube 54, and a fan 56. In this case, outside air is adjusted to an appropriate temperature by being caused to pass through the filter 52 and the earth tube 54, and then is taken into the house 60 by the fan 56. Alternatively, for example, the temperature and humidity in the house 60 may also be controlled through use of a commercially available air-conditioning device. Alternatively, the following configurations may also be employed. That is, a material having a high heat insulation effect is used as the material for the house 60, a light-shielding curtain is used for the purpose of controlling the radiation of sunlight into the house 60, or a heat insulation function is imparted to wall surfaces of the house 60 for the purpose of reducing a change in temperature in the house 60.

Further, as the state to be monitored in the plant cultivation system 1, there may be given the state of the simple nutrient solution S. In the plant cultivation system 1, at least values of the dissolved-oxygen concentration (DO), the electrical conductivity (EC), the temperature Ts, the hydrogen ion concentration index (pH), and the oxidation-reduction potential (ORP) of the simple nutrient solution S are managed to be maintained substantially constant. It is preferred that various sensors for monitoring those values be provided, for example, in the cultivation tank 10, and it is preferred that the monitoring data from the sensors be recorded constantly. Further, it is preferred that the monitoring data be recorded and displayed as a graph in a display device that allows appropriate confirmation by a supervisor of the system, and/or recorded and printed out onto a recording sheet. When those values deviate from the appropriate ranges, it is preferred that an alert be issued to the supervisor.

In the case where an abnormal value is found, an appropriate operation is performed manually by the supervisor or automatically by the system 1 so that the parameter value is restored within a normal range. When the dissolved-oxygen concentration (DO) exhibits an abnormal value, the value can be restored within a normal range, for example, by operating the reformed air supply pump 32 and/or controlling the opening/closing of the valve (not shown) in front of the reformed air supply portion 36. When the temperature Ts exhibits an abnormal value, the value can be restored within a normal range, for example, by performing temperature adjustment with temperature adjusting means of the reformed air production means 20. When the electrical conductivity (EC), the hydrogen ion concentration (pH), and the oxidation-reduction potential (ORP) exhibit abnormal values, the values can be restored within normal ranges, for example, by adding a required amount of water and/or nutrients to the simple nutrient solution S.

Further, as the state to be monitored in the plant cultivation system 1, there may be given the state of the reformed air RA. In the plant cultivation system 1, at least the temperature and flow rate of the reformed air RA are managed so as to be maintained at a predetermined temperature and flow rate. It is preferred that various sensors for monitoring those values be provided, for example, at appropriate positions on the reformed air tube 34, and it is preferred that the monitoring data from the sensors be recorded constantly. Further, it is preferred that the monitoring data be recorded and displayed as a graph in a display device that allows appropriate confirmation by a supervisor of the system, and/or recorded and printed out onto a recording sheet. When those values deviate from the appropriate ranges, it is preferred that an alert be issued to the supervisor.

In the case where an abnormal value is found, an appropriate operation is performed manually by the supervisor or automatically by the system 1 so that the parameter value is restored within a normal range. When the temperature of the reformed air RA exhibits an abnormal value, the value can be restored within a normal range by performing temperature adjustment with the reformed air temperature adjusting means. When the flow rate of the reformed air RA exhibits an abnormal value, the value can be restored within a normal range, for example, by operating the reformed air supply pump 32 and/or controlling the opening/closing of the valve (not shown) in front of the reformed air supply portion 36.

Further, when the outside air A is taken into the reformed air storage chamber 24, it is preferred that the states of the contamination of various filters, such as the denitrification filter, the deammoniation filter, the desalting filter, and the dustproof filter through which the outside air A passes, be checked regularly, and those filters be replaced periodically or as necessary. It is preferred that an alert for prompting the supervisor to replace the filter be issued to the supervisor periodically or in the case where the filter is clogged.

### Reference Signs List

- 1: plant cultivation system
- 2: sheet receiving plate
- 3: receiving plate main body
- 3a: short wall
- 3b: opening
- 3c c: flange
- 4a, 4b: sheet hanger member
- 5: mesh plate
- 6: nonwoven fabric
- 7: bottom piece
- 8a, 8b, 8c, 8d: vertical piece
- 9: connecting member
- 10: cultivation tank
- 11: support base (support)
- 11A: cultivation pot receiving body (support)
- 12: opening
- 13, 13A: cultivation pot
- 14: medium
- 15: medium support sheet
- 15a: peak
- 15b: valley
- 15c: cutaway portion
- 16a, 16b: discharge port
- 19: column
- 20: reformed air production means
- 21: air intake portion
- 22: air reforming means
- 23: suction fan
- 24: reformed air storage chamber
- 25: geothermal heat utilization heat pump
- 26: heat release portion
- 27: tube cooling portion
- 28: temperature sensor
- 30: reformed air supply means
- 32: reformed air supply pump
- 34: reformed air tube
- 36: reformed air supply portion
- 36a: porous body
- 36b: hollow portion
- 38: bacterial colonization portion
- 40: nutrient solution circulation means
- 41: discharge-side nutrient solution tank
- 41a, 41b: solution receiving port
- 41 c: solution sending port
- 42: nutrient solution circulation pump
- 43: nutrient solution tube
- 44: supply-side nutrient solution tank
- 44a: solution receiving port
- 44b: solution sending port
- 45: nutrient solution supply path
- 45a: supply port for simple nutrient solution
- 46: nutrient solution discharge path
- 50: in-house cooling means
- 52: filter
- 54: earth tube
- 56: fan
- 60: house
- S: simple nutrient solution
- A: air
- RA: reformed air

## Claims

1. A plant cultivation system for simultaneously cultivating wide variety of plants without causing continuous cropping injury through use of a simple nutrient solution,
the plant cultivation system being configured to:
set a temperature of reformed air to a predetermined temperature, the reformed air being obtained by reforming air into a state suitable for setting a dissolved-oxygen concentration of the simple nutrient solution in a cultivation tank for holding a wide variety of plants to a predetermined concentration; and
supply, at a flow rate required for setting the dissolved-oxygen concentration of the simple nutrient solution to the predetermined concentration, the reformed air from a vicinity of a bacterial colonization portion into the simple nutrient solution flowing at a predetermined speed through the cultivation tank.

2. A plant cultivation system according to claim 1, wherein the reformed air is supplied in a state of air bubbles into the simple nutrient solution through intermediation of a porous body.

3. A plant cultivation system according to claim 2, wherein the porous body is used as the bacterial colonization portion, and the reformed air is supplied into the cultivation tank through the bacterial colonization portion.

4. A plant cultivation system according to any one of claims 1 to 3, wherein the reformed air is supplied into the simple nutrient solution from a plurality of portions in the cultivation tank.

5. A plant cultivation system according to any one of claims 1 to 4, wherein the reformed air is obtained by removing nitrogen from the air.

6. A plant cultivation system according to any one of claims 1 to 5, wherein the reformed air is supplied into the simple nutrient solution after the reformed air is held in a reformed air storage chamber having an internal temperature maintained at a predetermined temperature until the reformed air reaches a temperature equal to the predetermined temperature.

7. A plant cultivation system according to claim 1, wherein an electrical conductivity indicating a nutrient solubility of the simple nutrient solution is from 2.5 mS/cm to 3.5 mS/cm.

8. A plant cultivation system according to claim 1,
wherein the predetermined speed of the simple nutrient solution flowing through the cultivation tank is a flow speed of the simple nutrient solution, which is adjusted so that a pressure applied to a root of a wide variety of plants to be cultivated is substantially equal to a pressure in soil,
wherein the predetermined concentration is a concentration of dissolved oxygen, which is suitable for activating activities of the root of a wide variety of plants and aerobic bacteria, and
wherein the predetermined temperature is a temperature of the reformed air, which avoids an adverse effect on the root of a wide variety of plants.

9. A plant cultivation system according to claim 1 or 8, wherein the predetermined speed is from 3 cm/sec to 5 cm/sec.

10. A plant cultivation system according to claim 1 or 8, wherein the predetermined concentration is from 8 ppm to 12 ppm.

11. A plant cultivation system according to claim 1 or 8, wherein the predetermined temperature is from 18°C to 22°C.

12. A plant cultivation system according to claim 1, wherein the flow rate per hour of the reformed air is from 3 times to 5 times with respect to an entire volume of the simple nutrient solution circulating through the cultivation tank and a tank.

13. A plant cultivation system according to claim 1, wherein the plant cultivation system is configured such that the simple nutrient solution circulates through a circulation path connecting the cultivation tank and a tank to each other while being mixed without stagnation.

14. A plant cultivation device for simultaneously cultivating wide variety of plants without causing continuous cropping injury through use of a simple nutrient solution,
the plant cultivation device comprising:
a cultivation tank for holding a wide variety of plants and the simple nutrient solution flowing at a predetermined speed;
air reforming means for reforming air into a state suitable for setting a dissolved-oxygen concentration of the simple nutrient solution in the cultivation tank to a predetermined concentration, to thereby obtain reformed air;
reformed air temperature adjusting means for adjusting a temperature of the reformed air to a predetermined temperature;
reformed air supply means for supplying the reformed air into the simple nutrient solution in the cultivation tank at a flow rate required for setting the dissolved-oxygen concentration of the simple nutrient solution to the predetermined concentration;
a bacterial colonization portion arranged in a vicinity of a reformed air supply portion of the reformed air supply means; and
simple nutrient solution circulation means for circulating the simple nutrient solution between the cultivation tank and a tank.

15. A plant cultivation device according to claim 14, wherein the reformed air supply portion comprises a porous body.

16. A plant cultivation device according to claim 15, wherein the porous body comprises the bacterial colonization portion.

17. A plant cultivation device according to any one of claims 14 to 16, wherein the reformed air supply portion comprises a plurality of reformed air supply portions formed in the cultivation tank.

18. A plant cultivation device according to claim 14, wherein the air reforming means comprises a filter for removing nitrogen from the air.

19. A plant cultivation device according to claim 14,
wherein the reformed air temperature adjusting means comprises a reformed air storage chamber having an internal temperature maintained at a predetermined temperature, and
wherein the reformed air is supplied by the reformed air supply means after the reformed air is held in the reformed air storage chamber until the reformed air reaches a temperature equal to the predetermined temperature.

20. A plant cultivation device according to claim 14, wherein an electrical conductivity indicating a nutrient solubility of the simple nutrient solution is from 2.5 mS/cm to 3.5 mS/cm.

21. A plant cultivation device according to claim 14,
wherein the predetermined speed of the simple nutrient solution flowing through the cultivation tank is a flow speed of the simple nutrient solution, which is adjusted so that a pressure applied to a root of a wide variety of plants to be cultivated is substantially equal to a pressure in soil,
wherein the predetermined concentration is a concentration of dissolved oxygen, which is suitable for activating activities of the root of a wide variety of plants and aerobic bacteria, and
wherein the predetermined temperature is a temperature of the reformed air, which avoids an adverse effect on the root of a wide variety of plants.

22. A plant cultivation device according to claim 14 or 21, wherein the predetermined speed is from 3 cm/sec to 5 cm/sec.

23. A plant cultivation device according to claim 14 or 21, wherein the predetermined concentration is from 8 ppm to 12 ppm.

24. A plant cultivation device according to claim 14 or 21, wherein the predetermined temperature is from 18°C to 22°C.

25. A plant cultivation device according to claim 14, wherein the flow rate per hour of the reformed air is from 3 times to 5 times with respect to an entire volume of the simple nutrient solution circulating through the cultivation tank and the tank.

26. A plant cultivation device according to claim 14, wherein the simple nutrient solution circulation means comprises:
a pump for circulating the simple nutrient solution;
a first tank for mixing the simple nutrient solution discharged from the cultivation tank;
a second tank for mixing the simple nutrient solution to be supplied to the cultivation tank; and
a cross tube for connecting the first tank and the second tank to each other.

27. A plant cultivation method for simultaneously cultivating wide variety of plants without causing continuous cropping injury through use of a simple nutrient solution,
the plant cultivation method comprising the steps of:
causing the simple nutrient solution to flow at a predetermined speed into a cultivation tank for holding a wide variety of plants;
reforming air into a state suitable for setting a dissolved-oxygen concentration of the simple nutrient solution in the cultivation tank to a predetermined concentration, to thereby obtain reformed air;
setting a temperature of the reformed air to a predetermined temperature; and
supplying the reformed air from a vicinity of a bacterial colonization portion into the simple nutrient solution in the cultivation tank at a flow rate required for setting the dissolved-oxygen concentration of the simple nutrient solution to the predetermined concentration.

28. A plant cultivation method according to claim 27, wherein the step of supplying the reformed air into the simple nutrient solution comprises a step of supplying the reformed air into the simple nutrient solution in a state of air bubbles through intermediation of a porous body.

29. A plant cultivation method according to claim 28, wherein the step of supplying the reformed air into the simple nutrient solution comprises supplying the reformed air through intermediation of the porous body serving as the bacterial colonization portion.

30. A plant cultivation method according to any one of claims 27 to 29, wherein the step of supplying the reformed air into the simple nutrient solution comprises supplying the reformed air into the simple nutrient solution from a plurality of portions in the cultivation tank.

31. A plant cultivation method according to claim 27, wherein the step of reforming air comprises a step of removing nitrogen from the air.

32. A plant cultivation method according to claim 27, wherein the step of setting a temperature of the reformed air to a predetermined temperature comprises a step of holding the reformed air in a reformed air storage chamber having an internal temperature maintained at a predetermined temperature until the reformed air reaches the predetermined temperature.

33. A plant cultivation method according to claim 27, wherein an electrical conductivity indicating a nutrient solubility of the simple nutrient solution is from 2.5 mS/cm to 3.5 mS/cm.

34. A plant cultivation method according to claim 27,
wherein the predetermined speed of the simple nutrient solution flowing through the cultivation tank is a flow speed of the simple nutrient solution, which is adjusted so that a pressure applied to a root of a wide variety of plants to be cultivated is substantially equal to a pressure in soil,
wherein the predetermined concentration is a concentration of dissolved oxygen, which is suitable for activating activities of the root of a wide variety of plants and aerobic bacteria, and
wherein the predetermined temperature is a temperature of the reformed air, which avoids an adverse effect on the root of a wide variety of plants.

35. A plant cultivation method according to claim 27 or 34, wherein the predetermined speed is from 3 cm/sec to 5 cm/sec.

36. A plant cultivation method according to claim 27 or 34, wherein the predetermined concentration is from 8 ppm to 12 ppm.

37. A plant cultivation method according to claim 27 or 34, wherein the predetermined temperature is from 18°C to 22°C.

38. A plant cultivation method according to claim 27, wherein the flow rate per hour of the reformed air is from 3 times to 5 times with respect to an entire volume of the simple nutrient solution circulating through the cultivation tank and a tank.

39. A plant cultivation method according to claim 27, wherein the plant cultivation method further comprises a step of circulating the simple nutrient through a circulation path connecting the cultivation tank and a tank to each other while mixing the simple nutrient without stagnation.
